# FASCICULE DE BREVET EUROPEEN

(11) **EP 2 589 158 B1**
(45) Date de publication et mention de la délivrance du brevet: **30.03.2016**
(21) Numéro de dépôt: 11741632.1
(22) Date de dépôt: 01.07.2011
(51) Int. Cl.: H04B 3/54, H04L 12/18, H04L 12/28

(54) **DISPOSITIF, PROCÉDÉ ET RÉSEAU DE COMMANDE PAR COURANTS PORTEURS D'APPAREILS ÉLECTRIQUES**
VORRICHTUNG, VERFAHREN UND NETZ FÜR DIE TRÄGERSTROMSTEUERUNG ELEKTRISCHER GERÄTE
DEVICE, METHOD AND NETWORK FOR CARRIER CURRENT CONTROL OF ELECTRICAL APPLIANCES

(30) Priorité: 02.07.2010 FR 1002805
(43) Date de publication de la demande: 08.05.2013
(73) Titulaire: Wathelet, Luc, 31170 Tournefeuille (FR)
(72) Inventeur: Wathelet, Luc, 31170 Tournefeuille (FR)
(74) Mandataire: Cabinet BARRE LAFORGUE & associés
(86) Numéro de dépôt international: PCT/FR2011/051556
(87) Numéro de publication internationale: WO 2012/001333

(56) Documents cités:
- EP-A1- 1 798 840
- EP-A1- 2 110 959
- EP-A2- 1 443 709

## Description

L'invention concerne un dispositif de commande par courants porteurs d'appareils électriques, et un procédé mettant en oeuvre au moins deux de ces dispositifs avec des relations maître-esclave.

On connaît des méthodes d'appariement d'appareils électriques (cf. par exemple WO 2009/142375), qui permettent à plusieurs appareils électriques de communiquer entre eux, comprenant une étape d'identification d'un dispositif portable auprès d'un ordinateur multimédia, une étape de communication de données entre les appareils, et une étape de rupture de la communication entre le dispositif portable et l'ordinateur multimédia. Mais il s'agit toujours d'appareils électriques disposant au préalable de leurs propres moyens de traitement de données et de leurs propres moyens de communication. Ces méthodes ne sont donc pas applicables à des appareils électriques ne disposant pas de moyens de calcul et de moyens de communication.

On connaît aussi des dispositifs permettant d'apparier des appareils électriques par liaisons sans fil (cf. par exemple EP 1 398 982 ou US 2004/179545).

On connaît aussi des dispositifs permettant de contrôler un ou plusieurs appareils électriques connectés à un même réseau électrique, par courants porteurs, grâce à un système d'adressage des dispositifs, par exemple grâce à un algorithme d'encodage sur 8 bits (cf. par exemple US 5614811). Mais ces dispositifs constituent des réseaux d'adresses fixes et des appariements entre appareils électriques déterminés et non reconfigurables ou difficilement reconfigurables nécessitant l'intervention de spécialistes avec des équipements spécifiques.

EP 2 110 959 décrit le fonctionnement d'un réseau d'appareils communicants dans lequel un adressage par adresse IP est réalisé. Cependant, ce document ne fournit pas de solution en ce qui concerne la commande d'entrée en mode d'appariement pour configurer ou reconfigurer le réseau d'appareils appariés. EP 2 110 959 évoque la possibilité d'effectuer dix commutations successives d'un interrupteur, ce qui est fastidieux lorsque des milliers d'appareils sont à apparier comme sur un navire de croisière par exemple, ce qui suppose aussi une installation complexe et ce qui est en outre impossible à réaliser avec d'autres appareils que des interrupteurs. De plus, les interfaces mécaniques entre utilisateur et appareils telles que décrites par ce document présentent de nombreux problèmes, notamment en termes de sécurité électrique.

Les dispositifs connus ne permettent pas d'apparier des appareils électriques de manière simple, reconfigurable et dans des conditions de sécurité optimales.

En effet, les dispositifs d'appariement connus présentent de nombreux inconvénients :
- soit leur utilisation est très rigide (l'appariement entre appareils n'est pas reconfigurable),
- soit ils sont difficiles d'utilisation (ils requièrent l'utilisation d'outils complexes et de connaissances techniques spécifiques),
- soit leur mise en oeuvre est dangereuse (l'utilisateur de tels dispositifs peut se trouver en contact électrique avec le réseau électrique),
- soit leur utilisation est fastidieuse (bien que d'usage simplifié, ils nécessitent un temps de mise en oeuvre important et parfois des tâches répétitives),
- soit, enfin, ils sont coûteux (ils requièrent l'utilisation plusieurs technologies de communication en combinaison, un ordinateur, etc.).

L'invention vise donc de façon générale à pallier ces inconvénients.

L'invention vise ainsi à proposer un dispositif électronique d'appariement par courants porteurs d'appareils électriques simple d'usage, simple technologiquement, sécurisé, et qui réponde aux différentes normes, d'isolation électrique en particulier.

Plus particulièrement, l'invention vise à proposer un dispositif électronique d'appariement par courants porteurs d'appareils électriques pouvant être utilisé en réseau avec des interactions de type maître-esclave entre dispositifs.

L'invention vise également à proposer un tel dispositif qui permette d'apparier au moins deux appareils électriques par une action générique simple d'un utilisateur.

L'invention vise également à proposer un dispositif permettant de créer un réseau reconfigurable de tels dispositifs afin de pouvoir reconfigurer les appariements d'appareils électriques.

L'invention concerne donc un dispositif de commande par courants porteurs d'appareils électriques, comportant une connexion électrique à un réseau électrique d'alimentation, une connexion électrique à au moins un appareil électrique branché sur ledit réseau électrique d'alimentation, une unité de traitement de données adaptée pour permettre une communication par courants porteurs sur ledit réseau électrique d'alimentation entre le dispositif et au moins un autre dispositif de commande par courants porteurs connecté au même réseau électrique d'alimentation, ladite communication comprenant une transmission d'au moins un identifiant de l'un au moins des dispositifs de commande par courants porteurs sur le réseau électrique d'alimentation,
caractérisé :
- en ce qu'il comporte au moins un détecteur de champ magnétique, dit détecteur de commande d'appariement, sensible à au moins un signal directionnel magnétique de commande d'appariement émis sans fil et sans contact par balayage d'un émetteur passif et directionnel de signal de télécommande du détecteur de commande d'appariement à proximité de ce dernier, ledit détecteur de commande d'appariement étant connecté à l'unité de traitement de données,
- en ce qu'il comprend une protection périphérique d'isolation électrique,
- et en ce que ladite unité de traitement de données est adaptée pour pouvoir exécuter, sur détection, par ledit détecteur de commande d'appariement, d'au moins un signal de commande représentatif d'une commande d'appariement, au moins un processus d'appariement du dispositif de commande par courants porteurs avec au moins un autre dispositif de commande par courants porteurs connecté au même réseau électrique d'alimentation, ledit processus d'appariement comprenant :
   ▪ au moins une étape d'émission par courants porteurs sur le réseau électrique d'alimentation d'au moins un identifiant de l'un au moins, dit dispositif esclave, des dispositifs de commande par courants porteurs,
   ▪ au moins une étape d'enregistrement par l'un au moins un dispositif, dit dispositif maître, des dispositifs de commande par courants porteurs, de chaque identifiant reçu par courants porteurs par ce dispositif maître.

Un dispositif selon l'invention présente des moyens de connexion électrique à un réseau électrique d'alimentation, ledit réseau électrique d'alimentation étant capable d'alimenter ledit dispositif en énergie électrique. En particulier un dispositif selon l'invention présente des moyens de connexion électrique à un réseau électrique d'alimentation indépendamment de ses connexions électriques avec un ou plusieurs appareil(s) électrique(s) afin d'assurer son alimentation en énergie électrique de manière autonome.

Un dispositif selon l'invention n'est pas un dispositif d'adressage automatique d'appareils électriques au sein d'un réseau intelligent. Un dispositif selon l'invention permet l'appariement, c'est-à-dire le fonctionnement coordonné d'appareils électriques. Un dispositif selon l'invention permet en particulier la configuration et la reconfiguration des différents liens d'appariement entre appareils électriques connectés à un même réseau d'alimentation électrique. Un dispositif selon l'invention permet à un utilisateur de (re)configurer manuellement les liens d'appariement entre dispositifs selon l'invention (et donc entre appareils électriques équipés de tels dispositifs) sans toutefois être exposé au risque d'électrocution grâce à un détecteur de commande sans fil et sans contact.

Un dispositif selon l'invention présente des moyens de connexion électrique à un appareil électrique. En particulier un dispositif selon l'invention est capable d'assurer une liaison électrique entre ledit réseau électrique et ledit appareil électrique, c'est-à-dire qu'un tel dispositif est capable de transmettre un courant électrique de tension et d'intensité du même ordre de grandeur que ce que peut fournir le réseau électrique d'alimentation, ou au moins de l'ordre de grandeur requis par l'appareil électrique.

L'appareil électrique auquel un dispositif selon l'invention est connecté peut être dépendant dudit dispositif pour son alimentation en énergie électrique ou indépendamment alimenté par le réseau électrique d'alimentation. La dépendance de l'appareil électrique vis-à-vis d'un dispositif selon l'invention dépend principalement de ce qu'il est émetteur de commandes vers au moins un autre appareil électrique grâce à au moins un dispositif selon l'invention : dans ce cas il est indépendamment branché et donc alimenté par le réseau électrique. Si, au contraire son fonctionnement est dépendant d'une commande reçue d'au moins un autre appareil électrique par l'intermédiaire d'au moins un dispositif selon l'invention, son fonctionnement est dépendant dudit dispositif.

Un dispositif selon l'invention peut être facilement adjoint à tout appareil électrique. Un tel dispositif permet à un appareil électrique ne disposant d'aucun moyen de communication d'être apparié à tout autre appareil électrique lui-même équipé d'un dispositif selon l'invention. Les liens d'appariement de cet appareil électrique avec d'autres appareils électriques peuvent être reconfigurés manuellement, rapidement et simplement autant de fois que jugé nécessaire par un utilisateur.

Une unité de traitement de données selon l'invention comprend notamment au moins un dispositif de traitement numérique de données, par exemple formé de circuits électroniques choisis parmi : au moins un microprocesseur, au moins un microcontrôleur, au moins une mémoire vive associée, au moins une mémoire morte associée. L'unité de traitement comporte des connecteurs d'entrée de données dont une au moins est reliée audit détecteur de commande d'appariement, et des connecteurs de sortie de données.

De plus, une unité de traitement de données selon l'invention comporte des moyens de communication par courants porteurs. Ces moyens de communication peuvent par exemple comporter un modem de communication par courants porteurs. Une telle unité de traitement de données doit donc présenter des moyens de connexion électrique audit réseau électrique afin d'être alimentée et d'émettre et/ou recevoir des signaux par courants porteurs.

Une unité de traitement de données selon l'invention comporte avantageusement une mémoire inscriptible non volatile (ou mémoire morte), c'est-à-dire une mémoire persistante même si l'alimentation dudit dispositif est coupée, par exemple de type FLASH ou EEPROM. Cette mémoire non-volatile peut servir à enregistrer des données logiques et/ou des identifiants de dispositifs selon l'invention.

Des données logiques enregistrées dans une telle mémoire (par exemple de type FLASH) représentent par exemple des ordres d'exécution à l'usage du/des processeur(s) ou du/des microcontrôleur(s) dans les diverses conditions d'utilisation d'un dispositif selon l'invention. En particulier ces données logiques sont telles qu'elles permettent à l'unité de traitement de données de générer un signal à partir de données enregistrées dans une(des) mémoire(s) du dispositif, et/ou d'inscrire des données dans une(des) mémoire(s) à partir de données reçues. En particulier ces données logiques représentent des instructions pour des étapes à mettre en oeuvre par le(s) processeurs et/ou le(s) microcontrôleur(s) lors du processus d'appariement de dispositifs selon l'invention. Ces données logiques représentent aussi, en particulier, des instructions pour des étapes à mettre en oeuvre par le(s) processeurs et/ou le(s) microcontrôleur(s) lors de la réception de signaux par courants porteurs, lors de la réception de signaux par l'unité de traitement de données issus du détecteur de commande d'appariement, ou lors de la réception de tout autre signal par l'unité de traitement de données.

Rien n'empêche en outre, dans un mode de réalisation particulier de l'invention, que l'unité de traitement de données comporte aussi au moins une mémoire utile à l'exécution des instructions représentées par lesdites données logiques.

Un dispositif selon l'invention comporte aussi en particulier au moins un identifiant qui lui est propre, enregistré dans une mémoire non-volatile. L' (les)identifiant(s) du dispositif est(sont) attribué(s) par exemple lors de la fabrication du dispositif, lors de sa programmation en usine, ou encore il peut être déterminé au cours de l'utilisation dudit dispositif.

Un détecteur de commande d'appariement d'un dispositif selon l'invention est connecté à l'unité de traitement de données.

En particulier un détecteur de commande d'appariement selon l'invention est sensible à des signaux de commande communiqués sans fil et sans contact entre le détecteur et un utilisateur du dispositif, et en particulier sans contact entre le dispositif et un utilisateur, et a fortiori sans contact entre le réseau électrique d'alimentation et un utilisateur.

L'invention prévoit en particulier un détecteur apte à détecter des signaux de commande génériques pour une pluralité de dispositifs distincts, c'est-à-dire des signaux non distinctifs d'un dispositif ou d'un autre (c'est-à-dire ne contenant pas d'identifiant propre à un dispositif). Un signal de ce type peut notamment être une simple impulsion. Un tel signal est aussi directionnel, c'est-à-dire que, étant générique d'une pluralité de dispositifs, il comporte une direction principale, et doit être généralement dirigé par un utilisateur vers le détecteur du dispositif (a fortiori vers le dispositif) auquel il souhaite donner une commande d'appariement de configuration.

Selon l'invention un détecteur de commande d'appariement est choisi de telle manière que lorsque deux dispositifs selon l'invention sont installés à proximité l'un de l'autre, il soit possible pour un utilisateur de donner une commande d'appariement sélectivement à l'un des deux détecteurs sans que le second détecteur ne détecte ladite commande. Ainsi un détecteur selon l'invention est avantageusement choisi de manière à être d'autant plus sélectif directionnellement qu'il est destiné à être installé à proximité d'un autre détecteur. De même un émetteur de télécommande destiné à émettre la commande d'appariement vers le détecteur de commande d'appariement doit être choisi d'autant plus directionnel et sélectif que lesdits dispositifs sont destinés à être installés proches les uns des autres.

Avantageusement dans un dispositif selon l'invention, ledit détecteur de commande d'appariement est adapté pour pouvoir détecter un signal de commande d'appariement émis par balayage, à proximité du détecteur de commande d'appariement, d'un émetteur passif et directionnel de signal de télécommande du détecteur de commande d'appariement.

Un tel détecteur de commande d'appariement est aussi apte à détecter un signal de commande d'appariement émis par balayage, par un utilisateur, d'un émetteur de signal de télécommande. Un dispositif selon l'invention est aussi avantageusement compatible avec un émetteur de signal de télécommande passif, c'est-à-dire qui ne génère pas un nouveau signal chaque fois qu'il est actionné par l'utilisateur, par exemple un aimant permanent par opposition avec un émetteur actif tel qu'un émetteur de signal infrarouge.

Un détecteur de commande pouvant détecter le balayage d'un émetteur passif et directionnel de signal de télécommande est particulièrement avantageux dans un dispositif selon l'invention. En effet, un tel détecteur ne requiert pas l'utilisation d'une télécommande complexe autoalimentée, et est donc lui-même simple et peu consommateur d'énergie. De plus l'utilisation d'une télécommande à émetteur directionnel évite d'avoir à mettre en oeuvre un adressage des dispositifs : un utilisateur peut sélectionner le dispositif auquel il envoie un signal de commande d'appariement en dirigeant la télécommande vers le dispositif visé. En outre, un tel détecteur autorise l'installation du dispositif selon l'invention dans une cloison (en améliorant ainsi l'isolation électrique) car il ne nécessite pas d'être visible pour un utilisateur ou une télécommande. Un tel détecteur n'est pas non plus intempestivement activé ; son activation résulte d'une opération volontaire de balayage d'un émetteur spécifique de télécommande par un utilisateur. Enfin, un tel détecteur ne présente avantageusement pas de parties mobiles qui posent des problèmes d'isolation électrique complexes.

Avantageusement, un dispositif selon l'invention comprend à titre d'exemple, un ou plusieurs détecteur(s) choisi(s) parmi les détecteurs suivants : détecteur optique, détecteur acoustique, détecteur d'onde électromagnétique (notamment détecteur de signal sans fil), détecteur de variation du champ magnétique (notamment détecteur de passage d'un aimant), détecteur de variation de champ électrique, ou autre.

Un capteur de commande d'appariement peut être choisi parmi plusieurs types de détecteurs de champs magnétiques (par exemple capteur à effet Hall, capteur REED, etc.). L'utilisation d'un détecteur de champ magnétique comme détecteur de commande d'appariement présente pour avantage de pouvoir être utilisé, selon l'invention, en combinaison avec un émetteur de télécommande simple, donc générique, directionnel et passif, donc ne consommant aucune énergie : un aimant permanent. Le balayage par l'utilisateur d'un aimant permanent sensiblement orienté vers un détecteur de commande d'appariement selon l'invention permet à l'utilisateur de réaliser une commande d'appariement à destination d'un dispositif selon l'invention.

En particulier, avantageusement et selon l'invention, ledit détecteur de commande d'appariement est un détecteur de champ magnétique, notamment de type capteur à effet Hall.

Par ailleurs, la commande d'au moins un premier appareil électrique par au moins un second appareil électrique nécessite l'utilisation d'au moins deux dispositifs selon l'invention, reliés électriquement par le même réseau électrique d'alimentation, respectivement avec des relations de maître(s) à esclave(s).

Deux modes de réalisation distincts d'un dispositif selon l'invention peuvent consister à fabriquer au moins un dispositif maître selon l'invention, au moins en partie structurellement et/ou fonctionnellement différent d'au moins un dispositif esclave selon l'invention.

En outre, avantageusement, un dispositif selon l'invention est caractérisé en ce qu'il comprend une protection périphérique d'isolation électrique.

Préférentiellement, un dispositif selon l'invention est donc électriquement isolé sur l'ensemble de sa périphérie, à l'exception des connections électriques, en particulier des connexions à un réseau électrique d'alimentation et à au moins un appareil électrique.

Plusieurs modes de réalisation de cette protection périphérique d'isolation électrique sont envisageables, par exemple :
- une coque protectrice ou un enrobage externe en matériau électriquement isolant,
- un bloc de résine électriquement isolante, notamment par moulage dans la masse (de résine) des éléments électriques et/ou électronique du dispositif,
- ou autre.

Ainsi, la combinaison d'une couche de matériau électriquement isolant à la périphérie externe d'un dispositif selon l'invention et d'un détecteur de commande d'appariement sans contact et sans fil permet de réaliser un dispositif à la fois simple et non dangereux. En particulier un dispositif selon l'invention répond aux normes électriques.

Par ailleurs, avantageusement, un dispositif selon l'invention ne comporte pas d'éléments mobiles entre eux. En effet, des éléments mobiles entre eux requièrent la réalisation de ruptures d'isolation électrique dans la couche électriquement isolante. Ainsi, avantageusement, un dispositif selon l'invention est résistant à l'immixtion de liquides par éclaboussure ou écoulements, à des agressions de gaz, ou encore à l'humidité.

En outre, un dispositif selon l'invention disposant d'un détecteur de commande d'appariement sans contact et sans fil et étant suffisamment compact, il peut être installé dans un boîtier électrique conventionnel, lui-même installé, par exemple, dans une cloison. Tout risque électrique est alors écarté.

Ainsi, avantageusement, un dispositif selon l'invention de commande par courants porteurs d'appareils électriques destiné à être fonctionnellement esclave d'au moins un autre dispositif de commande par courants porteurs d'appareils électriques est en outre caractérisé en ce que :
- il comporte un module, dit module de sortie, connecté à au moins un appareil électrique par ladite connexion électrique avec au moins un appareil électrique, et adapté pour commander ledit appareil électrique,
- ladite unité de traitement de données est adaptée pour pouvoir exécuter au moins un processus d'appariement comprenant au moins une étape d'émission par courants porteurs sur le réseau électrique d'alimentation d'au moins un identifiant du dispositif,
de sorte qu'il constitue un dispositif esclave.

Un dispositif esclave selon l'invention est destiné à être esclave d'au moins un autre dispositif selon l'invention. Cependant il est destiné à recevoir et mettre en oeuvre des commandes reçues d'au moins un dispositif maître selon l'invention, dont l'effet s'applique à au moins un appareil électrique auquel ledit dispositif esclave est électriquement relié. Ledit dispositif esclave est donc maître du(des) appareil(s) électrique(s)qu'il commande.

Un module de sortie selon l'invention est au moins connecté à un appareil électrique contrôlé par le dispositif esclave et à l'unité de traitement de données dudit dispositif esclave. Le module de sortie est commandé par l'unité de traitement de données.

Un module de sortie d'un dispositif selon l'invention est apte à commander ledit appareil électrique. En particulier, selon un mode de réalisation possible et préférentiel de l'invention, un tel module de sortie peut être utilisé pour faire varier l'alimentation dudit appareil électrique. Cependant, rien n'empêche de prévoir un dispositif selon l'invention capable de commander d'autres fonctionnalités, propres audit appareil électrique, via son unité de traitement de données et son module de sortie.

Dans un mode de réalisation particulier d'un dispositif selon l'invention, un module de sortie comprend au moins un commutateur, c'est-à-dire un interrupteur commandé, afin d'être en mesure de connecter et déconnecter l'appareil électrique du réseau électrique d'alimentation.

Dans un dispositif esclave selon l'invention, sur détection d'une commande d'appariement grâce à son détecteur de commande d'appariement, l'unité de traitement de données et les données logiques à sa disposition sont telles que l'unité de traitement de données émet un message par courants porteurs sur le réseau électrique d'alimentation auquel le dispositif esclave est électriquement relié par ses moyens de connexion électrique à un réseau électrique d'alimentation. Le dit message contient au moins un identifiant du dispositif tel que décrit ci-dessus. Cette étape permet l'appariement d'un tel dispositif esclave avec un autre dispositif apte à recevoir, identifier et enregistrer l'identifiant du dispositif esclave contenu dans le message.

Avantageusement, un dispositif selon l'invention de commande par courants porteurs d'appareils électriques destiné à être fonctionnellement maître d'au moins un autre dispositif de commande par courants porteurs d'appareils électriques est en outre caractérisé en ce que :
- il comporte un module, dit module d'entrée, connecté à au moins un appareil électrique par ladite connexion électrique avec au moins un appareil électrique, et adapté pour détecter un changement d'état de l'appareil électrique auquel il est connecté,
- ladite unité de traitement est adaptée pour pouvoir exécuter au moins un processus d'appariement comprenant au moins une étape d'enregistrement dans une mémoire, dite mémoire d'appariement, dudit dispositif, de chaque identifiant reçu par courants porteurs,
de sorte qu'il constitue un dispositif maître.

Un dispositif maître selon l'invention est destiné à être maître d'au moins un autre dispositif selon l'invention, qui est(sont) alors dans une relation d'esclave par rapport audit dispositif maître. Cependant il est destiné à émettre de commandes par courant porteur sur un réseau électrique d'alimentation vers des dispositifs esclaves en fonction de l'état d'au moins un appareil électrique auquel il est électriquement relié, et en particulier lors des changements d'état dudit(desdits) appareil(s) électrique(s), dont il est donc esclave.

Un module d'entrée d'un dispositif maître selon l'invention peut faire l'objet de multiples variantes de réalisation. Il est notamment apte à détecter des changements d'état d'un appareil électrique, parmi lesquels, par exemple, un changement de son alimentation électrique, un changement d'impédance globale, etc.

Selon un mode de réalisation de l'invention, le module d'entrée est apte à détecter et éventuellement à mesurer une variation de puissance (ou de puissance moyenne), et/ou de tension, et/ou d'intensité, ou autre. Les valeurs ou informations reçues en entrée par le module d'entrée peuvent correspondre, par franchissement de seuils ou proportionnellement, à différentes commandes d'un dispositif selon l'invention. Un dispositif selon l'invention peut donc mettre en oeuvre des processus différents en fonction des valeurs reçues en entrée par le module d'entrée, par exemple envoyer différents messages par courants porteurs sur le réseau électrique d'alimentation.

En particulier, et à titre d'exemple, le module d'entrée peut être adapté pour détecter la mise sous tension d'un appareil électrique, notamment sa connexion au réseau électrique d'alimentation. L'appareil électrique peut par exemple être un interrupteur et le module d'entrée est alors apte à détecter s'il est ouvert ou fermé.

Dans un dispositif maître selon l'invention, à partir de la détection d'une commande d'appariement grâce à son détecteur de commande d'appariement, l'unité de traitement de données et lesdites données logiques sont telles que l'unité de traitement de données enregistre tout identifiant d'un autre dispositif de commande par courants porteurs reçu par courants porteurs sur le réseau électrique d'alimentation auquel le dispositif maître est électriquement relié par ses moyens de connexion électrique à un réseau électrique d'alimentation. Le(s)dit identifiant(s) pouvant être reçu(s) seul(s) ou au sein d'un message contenant d'autres informations, notamment des informations de début et de fin de message. Cette étape permet l'appariement d'un tel dispositif maître avec au moins un autre dispositif apte à émettre son identifiant dans un message par courants porteurs sur le réseau électrique d'alimentation.

Avantageusement et selon un mode de réalisation particulier de l'invention, l'unité de traitement de données enregistre les identifiants reçus par courants porteurs dans une mémoire d'appariement volatile. L'unité de traitement de données transfère tout identifiant de ladite mémoire d'appariement vers une autre mémoire non volatile sur réception d'une seconde commande. Une telle seconde commande peut-être de toutes natures et en particulier : une seconde commande d'appariement détecté par le détecteur de commande d'appariement, une commande de fin de temporisation, une commande suite à un signal reçu par le module d'entrée, une commande reçue par courants porteurs, ou autre.

Dans un mode de réalisation de l'invention, un dispositif maître est adapté pour passer dans un mode de fonctionnement particulier pour procéder aux étapes d'appariement avec d'autres dispositifs de commande par courants porteurs lorsque son détecteur de commande d'appariement détecte une première commande d'appariement. Tant qu'un dispositif maître selon ce mode de réalisation particulier reste dans ce mode de fonctionnement, il enregistre tous les identifiants d'autres dispositifs de commande par courants porteurs qu'il reçoit.

Selon un mode de réalisation de l'invention, le dispositif quitte le mode de fonctionnement particulier propre au processus d'appariement lorsqu'il reçoit une seconde commande. La seconde commande peut être choisie parmi plusieurs possibilités comme décrit ci-dessus.

L'unité de traitement de données d'un dispositif selon l'invention est avantageusement similaire ou identique dans le cas d'un dispositif esclave et d'un dispositif maître. En particulier, avantageusement, un dispositif selon l'invention peut être mixte, tout à la fois maître et/ou esclave, c'est-à-dire qu'il peut être maître d'au moins un autre dispositif de commande par courants porteurs ; ou esclave d'au moins un autre dispositif de commande par courants porteurs ; ou à la fois maître d'au moins un autre dispositif de commande par courants porteurs et esclave d'au moins un autre dispositif de commande par courants porteurs. Ainsi un tel dispositif selon l'invention peut être alternativement soit uniquement maître, soit uniquement esclave, soit à la fois maître d'un ou plusieurs dispositif(s) selon l'invention et à la fois esclave d'un ou plusieurs dispositif(s) selon l'invention.

Selon un mode de réalisation d'un dispositif conforme à l'invention, tous les éléments matériels son identiques pour la réalisation d'un dispositif esclave selon l'invention, d'un dispositif maître selon l'invention, et d'un dispositif mixte selon l'invention. Seules des données logiques représentant des instructions pour le/les processeur(s) et/ou le/les microcontrôleur(s) permettent de différencier les fonctionnalités d'un tel dispositif selon l'invention. Dans le cas de la fabrication unique de dispositifs mixtes selon l'invention, tous les dispositifs sont matériellement et fonctionnellement identiques.

Ainsi, un dispositif selon l'invention est simple et peut être fabriqué à moindre coût par effet d'échelle de production. En effet, les composants et la fabrication sont avantageusement identiques pour un dispositif esclave, un dispositif maître et un dispositif mixte.

Ainsi, avantageusement et selon l'invention, un dispositif mixte de commande par courants porteurs est tel que :
- il comporte un module, dit module d'entrée, connecté à au moins un appareil électrique par ladite connexion électrique avec au moins un appareil électrique, et adapté pour détecter un changement d'état de l'appareil électrique auquel il est connecté,
- il comporte un module, dit module de sortie, connecté à au moins un appareil électrique par ladite connexion électrique avec au moins un appareil électrique, et adapté pour commander ledit appareil électrique,
- ladite unité de traitement de données est adaptée pour pouvoir exécuter, sur réception par ledit détecteur de commande d'appariement, d'au moins un signal de commande, au moins un processus d'appariement comprenant :
   ▪ au moins une étape d'activation ou de désactivation d'un mode, dit mode d'appariement maître, du dispositif, et
   ▪ au moins une étape d'émission d'un signal, dit signal de requête, par courants porteurs sur le réseau électrique d'alimentation,
- ladite unité de traitement de données est adaptée pour pouvoir exécuter, sur réception par courants porteurs d'un signal de requête d'un autre dispositif de commande par courants porteurs connecté au même réseau électrique d'alimentation, au moins un processus comprenant :
   ▪ au moins une étape d'activation d'un mode, dit mode d'appariement esclave, du dispositif,
- ladite unité de traitement de données est adaptée pour pouvoir exécuter, en mode d'appariement esclave et sur réception par ledit détecteur de commande d'appariement, d'au moins un signal de commande représentatif d'une commande d'appariement, au moins un processus d'appariement dudit dispositif avec au moins un autre dispositif de commande par courants porteurs connecté au même réseau électrique d'alimentation, ledit processus d'appariement comprenant au moins une étape d'émission par courants porteurs sur le réseau électrique d'alimentation d'au moins un identifiant du dispositif,
- ladite unité de traitement de données est adaptée pour pouvoir exécuter, en mode d'appariement maître et sur réception d'au moins un identifiant d'au moins un autre dispositif de commande par courants porteurs, au moins un processus d'appariement comprenant au moins une étape d'enregistrement dans une mémoire, dite mémoire d'appariement, par ledit dispositif de chaque identifiant reçu par courants porteurs.

Structurellement un tel dispositif comporte les éléments matériels d'un dispositif esclave et les éléments matériels d'un dispositif maître, en particulier il comporte un module d'entrée et un module de sortie tels que décrits ci-avant.

En revanche, le fonctionnement et en particulier les données logiques permettant l'exécution d'instructions par l'unité de traitement de données diffèrent à la fois d'un dispositif esclave et d'un dispositif maître. En effet un tel dispositif mixte selon l'invention doit pouvoir réagir différemment, notamment à une commande d'appariement, lorsqu'il assume la fonction de maître et lorsqu'il assume la fonction d'esclave.

Un mode, dit mode normal, est aussi avantageusement défini pour désigner le mode de fonctionnement d'un dispositif lorsqu'il n'est pas en mode d'appariement avec au moins un autre dispositif de commande par courants porteurs. En mode normal un tel dispositif, relié par un réseau électrique d'alimentation à au moins un autre dispositif selon l'invention, sert à transmettre par courants porteurs, une ou plusieurs commande(s) entre un premier appareil électrique auquel ledit dispositif est relié et au moins un second appareil électrique auquel un autre dispositif selon l'invention est relié.

Lorsqu'un dispositif mixte selon l'invention est en mode normal et détecte une commande d'appariement via son détecteur de commande d'appariement, l'unité de traitement de données du dispositif met en oeuvre un processus incluant au moins :
▪ une étape d'activation d'un mode, dit mode d'appariement maître, du dispositif, et
▪ une étape d'émission d'un signal, dit signal de requête, par courants porteurs sur le réseau électrique d'alimentation,

En mode d'appariement maître, un dispositif selon l'invention est notamment apte à enregistrer dans une mémoire, dite mémoire d'appariement, tout identifiant reçu par courants porteurs. Ledit identifiant pouvant être reçu seul ou au sein d'un message contenant d'autres informations, notamment des informations de début et de fin de message. Cette étape permet l'appariement d'un tel dispositif maître avec au moins un autre dispositif apte à émettre son identifiant dans un message par courants porteurs sur le réseau électrique d'alimentation.

Avantageusement et selon un mode de réalisation particulier de l'invention, l'unité de traitement de données enregistre les identifiants reçus par courants porteurs dans une mémoire d'appariement volatile tant que le dispositif reste en mode d'appariement maître.

Par ailleurs, rien n'empêche que lorsqu'un dispositif selon l'invention est en mode d'appariement maître et détecte une seconde commande, l'unité de traitement de données du dispositif mette en oeuvre un processus incluant au moins une étape de désactivation du mode d'appariement maître. Le mode d'appariement maître est alors désactivé, c'est-à-dire que le dispositif revient en mode normal, et l'unité de traitement de données peut réaliser un processus de fin de mode d'appariement maître comprenant :
▪ au moins une étape d'émission d'un signal, dit signal de fin de requête, par courants porteurs sur le réseau électrique d'alimentation,
▪ au moins une étape de transfert de tout identifiant enregistré dans ladite mémoire d'appariement vers une mémoire non volatile.

Une telle seconde commande apte à mettre fin au mode d'appariement maître peut être de multiples natures, parmi lesquelles, par exemple :
- une seconde commande d'appariement donné par un utilisateur au détecteur de commande d'appariement permettant à l'utilisateur de terminer manuellement le mode d'appariement maître,
- une commande de fin de temporisation permettant par exemple de déterminer une durée limite de mode d'appariement maître,
- une commande suite à un signal reçu par le module d'entrée permettant de mettre fin au mode d'appariement maître lorsque l'appareil électrique auquel le dispositif est relié change d'état,
- une commande reçue par courants porteurs.

De telles secondes commandes, aptes à mettre fin au mode d'appariement maitre d'un dispositif maître selon l'invention, seules ou en combinaison, représentent des moyens de sécurité afin que la mémoire non-volatile d'un dispositif maître contenant éventuellement un ou plusieurs identifiant(s) de dispositif(s) esclave(s) ne soit pas remise à zéro ou erronée par une fausse manipulation ou une commande d'appariement faussement détectée. Par exemple, un dispositif maître selon l'invention peut mettre en oeuvre une minuterie déclenchée par l'activation du mode d'appariement maître. Si aucune commande d'appariement n'est reçue avant la fin du délai prévu par la minuterie, les éventuelles données stockées en mémoire d'appariement ne sont pas transférées vers la mémoire non-volatile destinée à stocker définitivement chaque identifiant reçu par courants porteurs pendant le mode d'appariement maître du dispositif maître.

Dans le même objectif, le mode d'appariement maître dudit dispositif maître selon l'invention peut, par exemple, être annulé par la détection d'un signal par le module d'entrée indiquant un changement d'état du dite appareil électrique électriquement relié audit dispositif maître.

En outre, un signal de requête, émis par un dispositif selon l'invention qui vient d'être mis en mode d'appariement maître, peut être réalisé selon différentes variantes. En particulier, un tel signal de requête peut ou non contenir au moins un identifiant du dispositif émetteur du signal de requête.

Dans tous les cas, l'émission d'un signal de requête par un premier dispositif selon l'invention doit pouvoir être interprétée par tout autre dispositif selon l'invention électriquement connecté au même réseau électrique d'alimentation comme une information selon laquelle le premier dispositif selon l'invention est en mode d'appariement maître.

Par conséquent tant que ce(s) autre(s) dispositif(s) selon l'invention ne reçoiv(en)t pas de signal de fin de requête, il(s) se trouv(en)t dans une position d'esclave(s) vis-à-vis de ce premier dispositif.

De fait, ladite unité de traitement de données d'un premier dispositif selon l'invention esclave (ou mixte pouvant être à la fois maître et esclave) est adaptée pour pouvoir exécuter, sur réception par courants porteurs d'un signal de requête d'un autre dispositif selon l'invention, au moins un processus comprenant au moins une étape d'activation d'un mode, dit mode d'appariement esclave, du premier dispositif.

Un dispositif esclave selon l'invention est en mode d'appariement esclave lorsqu'il n'est pas en mode normal. Un dispositif mixte selon l'invention pouvant être maître ou esclave est en mode d'appariement esclave lorsqu'il n'est ni en mode normal, ni en mode d'appariement maître.

Un dispositif maître selon l'invention peut donc être dans un seul à la fois de deux modes de fonctionnement : en mode normal ou en mode d'appariement maître. Un dispositif esclave selon l'invention peut être dans un seul à la fois de deux modes de fonctionnement : en mode normal ou en mode d'appariement esclave. Un dispositif mixte selon l'invention pouvant être à la fois maître et/ou esclave peut être dans un seul à la fois de trois modes de fonctionnement : en mode normal, en mode d'appariement maître ou en mode d'appariement esclave. Dans toute la suite, un dispositif mixte selon l'invention est un dispositif pouvant être maître et/ou esclave.

Ainsi, lorsqu'un premier dispositif mixte selon l'invention se trouve dans un mode d'appariement maître, tous les autres dispositifs mixtes selon l'invention connectés au même réseau électrique d'alimentation se trouvent dans un mode d'appariement esclave. Lorsque ledit premier dispositif mixte sort du mode d'appariement de maître pour revenir à un mode normal de fonctionnement, tous les autres dispositifs mixtes connectés au même réseau électrique d'alimentation reviennent aussi à un mode normal de fonctionnement. Un dispositif mixte en mode d'appariement maître (respectivement en mode d'appariement esclave), est désigné dans la suite par « dispositif maître » (respectivement « dispositif esclave »).

Par conséquent, un signal de requête étant automatiquement émis par un dispositif mixte selon l'invention passant en mode d'appariement maître, sur un réseau électrique d'alimentation donné, seules deux situations peuvent exister :
- soit l'ensemble des dispositifs mixtes selon l'invention de commande par courants porteurs d'appareils électriques sont en mode normal,
- soit un unique dispositif mixte selon l'invention de commande par courants porteurs d'appareils électriques est en mode d'appariement maître, et tous les autres dispositifs mixtes selon l'invention de commande par courants porteurs d'appareils électriques sont en mode d'appariement esclave.

En mode d'appariement esclave, l'unité de traitement de données d'un dispositif selon l'invention, sur détection d'une commande d'appariement par ledit détecteur de commande d'appariement, réalise un processus comprenant au moins une étape d'émission par courants porteurs sur le réseau électrique d'alimentation d'au moins un identifiant du dispositif selon l'invention. Ainsi ledit dispositif selon l'invention en mode d'appariement esclave communique au moins l'un de ses identifiants au dispositif selon l'invention en mode d'appariement maître sur le même réseau électrique d'alimentation.

Cette étape combinée à l'étape, réalisée par le dispositif maître selon l'invention, d'enregistrement dans une mémoire d'appariement de l'identifiant communiqué du dispositif esclave au dispositif maître, est une étape d'appariement dudit dispositif esclave au dispositif maître. L'utilisateur en donnant les commandes d'appariement tant au dispositif maître qu'au(x) dispositif(s) esclave(s) peut ainsi apparier un ou plusieurs dispositif(s) (esclave(s)) selon l'invention à un premier dispositif (maître) selon l'invention, et ce de façon reconfigurable.

Les deux modes d'appariement (respectivement maître et esclave) permettent à un dispositif selon l'invention de mettre en oeuvre un processus différent lorsqu'il reçoit une même commande d'appariement générique selon qu'il se trouve dans le mode d'appariement maître ou dans le mode d'appariement esclave. Mais dans tous les cas, le premier d'une pluralité de dispositifs selon l'invention tous en mode normal, recevant une commande d'appariement est automatiquement défini comme dispositif maître pendant la durée du processus d'appariement.

Par ailleurs, selon d'autres modes de réalisation possibles de l'invention, un ou plusieurs type(s) de commande peu(ven)t annuler le mode d'appariement maître, c'est-à-dire faire sortir un dispositif selon l'invention du mode d'appariement maître et le faire revenir à un mode normal de fonctionnement, en interrompant l'appariement. Dans ce cas le dispositif selon l'invention en mode d'appariement maître termine son mode d'appariement maître, émet un signal de fin de requête, et revient en mode normal de fonctionnement. Le retour en mode normal peut s'accompagner du transfert ou du non-transfert en mémoire non volatile des éventuels identifiants enregistrés dans la mémoire d'appariement.

En mode normal de fonctionnement, un réseau de dispositifs selon l'invention connectés sur un réseau électrique d'alimentation remplit sa fonction de transmission de commandes entre appareils électriques auxquels lesdits dispositifs sont reliés.

En mode normal, un dispositif maître selon l'invention est apte à détecter un changement d'état de l'appareil électrique auquel son module d'entrée est électriquement relié. Lorsque le module d'entrée envoie une information à l'unité de traitement de données correspondante à un changement d'état dudit appareil électrique, ladite unité de traitement de données génère et envoie un signal, dit signal fonctionnel, par courants porteurs sur le réseau électrique d'alimentation. Un tel signal fonctionnel comporte au moins l'ensemble des identifiants stockés en mémoire non-volatile lors du dernier mode d'appariement maître. Un tel signal fonctionnel représente une commande, en mode normal, à destination du(des) dispositif(s) selon l'invention dont l'identifiant est cité au sein dudit signal fonctionnel, qui est(sont) alors dans une position d'esclave(s) vis-à-vis du dispositif selon l'invention émetteur du signal fonctionnel.

En mode normal, un dispositif esclave selon l'invention est apte à recevoir et à analyser un signal fonctionnel reçu par courants porteurs sur le réseau électrique d'alimentation auquel il est relié afin de détecter la présence ou l'absence d'au moins l'un de ses identifiants. Si au moins un de ses identifiants est contenu dans le signal fonctionnel, le dispositif esclave, via son unité de traitement de données, envoie un ordre au module de sortie relié à au moins un appareil électrique. Le dit dispositif esclave commande ledit appareil électrique.

Rien n'empêche, selon un mode de réalisation particulier de l'invention, de prévoir un signal fonctionnel qui, au lieu de conditionner l'activation du module de sortie d'un dispositif esclave selon l'invention sur la présence ou l'absence de son(ses) identifiant(s), conditionne l'activation du module de sortie d'un dispositif esclave selon l'invention sur l'absence de chacun de son(ses) identifiant(s). De même, rien n'empêche, selon l'invention, de prévoir un signal fonctionnel qui comporte l'ensemble des identifiants de l'ensemble des dispositifs (ou des dispositifs esclaves) selon l'invention du réseau, chaque identifiant étant alors accompagné d'une information représentant une commande attribuée aux dispositifs esclaves et pouvant correspondre à une commande de ne rien faire.

Avantageusement, un dispositif de commande par courants porteurs d'appareils électriques selon l'invention est monté en série par rapport à au moins un appareil électrique sur ledit réseau électrique d'alimentation.

Un dispositif selon l'invention est aussi destiné à être interposé sur le circuit d'alimentation du(des) appareil(s) électrique(s) auquel il est électriquement relié et par lesquels il est commandé ou qu'il commande (selon qu'il est respectivement maître ou esclave). Ainsi, un dispositif selon un mode de réalisation avantageux de l'invention comporte au moins trois connexions dans un réseau électrique d'alimentation biphasé : une connexion électrique sur chacune des deux phases pour sa propre alimentation, et au moins une connexion électrique à un appareil électrique. Ladite connexion électrique entre un dispositif selon l'invention et un appareil électrique se fait notamment via le module d'entrée (respectivement de sortie). L'appareil électrique est alors relié à l'une des deux phases par l'intermédiaire du dispositif selon l'invention.

Avantageusement, rien n'empêche de monter des dispositifs de commande par courants porteurs d'appareils électriques selon l'invention en réseau, se commandant de maître(s) à esclave(s) en cascade : c'est-à-dire qu'un ou plusieurs dispositifs selon l'invention sont à la fois maître et esclave d'autres dispositifs selon l'invention. Ainsi lorsqu'un tel dispositif selon l'invention reçoit une commande d'un dispositif maître, il communique à son tour une commande à son ou ses dispositifs esclaves, et ainsi de suite. Le montage en cascade permet de recourir avantageusement à l'affaiblissement, avec la distance parcourue, de la puissance d'un signal de commande par courants porteurs.

L'invention s'étend à un procédé de commandes par courant porteur d'appareils électriques dans lequel on utilise des dispositifs de commande par courant porteur d'appareils électriques selon l'invention tels que décrits ci-avant.

L'invention s'étend à un procédé de commande par courants porteurs d'appareils électriques, dans lequel on connecte électriquement à un réseau électrique d'alimentation au moins deux dispositifs de commande par courants porteurs, grâce à leurs moyens de connexion électrique à un réseau électrique d'alimentation, on connecte électriquement chacun des dispositifs à au moins un appareil électrique branché sur ledit réseau électrique d'alimentation grâce à leurs moyens de connexion à un appareil électrique, lesdits dispositif de commande par courants porteurs comportant au moins une unité de traitement de données adaptée pour permettre une communication par courants porteurs sur ledit réseau électrique d'alimentation, entre lesdits dispositifs de commande par courants porteurs, ladite communication comprenant une transmission d'au moins un identifiant de l'un au moins des dispositifs de commande par courants porteurs sur le réseau électrique d'alimentation,
caractérisé en ce que :
- on choisit chaque dispositif de commande par courants porteurs équipé d'au moins un détecteur, dit détecteur de commande d'appariement, relié à ladite unité de traitement du dispositif de commande par courants porteurs et adapté pour pouvoir recevoir et détecter au moins un signal directionnel magnétique de commande d'appariement émis sans fil et sans contact par balayage d'un émetteur passif et directionnel de signal de télécommande du détecteur (4) de commande d'appariement à proximité de ce dernier,
- on produit un signal de commande magnétique sans fil directionnel représentatif d'une commande d'appariement, par balayage d'un émetteur passif et directionnel de signal de télécommande à proximité du détecteur de commande d'appariement d'au moins l'un desdits dispositifs de commande par courants porteurs, dit dispositif esclave, et sur détection de cette commande d'appariement par ledit détecteur de commande d'appariement du dispositif esclave, ladite unité de traitement de données du dispositif esclave exécute un processus d'appariement comprenant au moins une étape d'émission par courants porteurs sur le réseau électrique d'alimentation d'au moins un identifiant du dispositif esclave,
- on produit un signal de commande magnétique sans fil directionnel représentatif d'une commande d'appariement, par balayage d'un émetteur passif et directionnel de signal de télécommande à proximité du détecteur de commande d'appariement d'au moins un autre desdits dispositifs de commande par courants porteurs, dit dispositif maître, et sur détection de cette commande d'appariement par ledit détecteur de commande d'appariement du dispositif maître, ladite unité de traitement de données du dispositif maître, exécute un processus d'appariement comprenant au moins une étape d'enregistrement de chaque identifiant de dispositif de commande par courants porteurs reçu par courants porteurs par ce dispositif maître.

Dans un procédé selon l'invention on choisit au moins deux dispositifs selon l'invention, chaque dispositif selon l'invention étant équipé chacun d'un détecteur de commande d'appariement connecté à l'unité de traitement de données dudit dispositif. Ledit détecteur de commande d'appariement de chacun des dispositifs selon l'invention choisi pour la mise en oeuvre du procédé étant tel que décrit ci-avant lors de la description d'un dispositif selon l'invention.

Dans un procédé selon l'invention, on produit un signal de commande d'appariement à destination du détecteur de commande d'appariement d'un dispositif esclave, et sur détection de celui-ci, l'unité de traitement de données dudit dispositif esclave exécute un processus d'appariement comprenant au moins une étape d'émission par courants porteurs sur le réseau électrique d'alimentation d'au moins un identifiant du dispositif esclave afin de l'apparier avec au moins un autre dispositif selon l'invention, dit dispositif maître.

Dans cette étape du procédé, l'utilisateur utilise une télécommande muni d'un émetteur adapté pour commander le détecteur de commande d'appariement d'un dispositif selon l'invention choisi pour la mise en oeuvre du procédé, et envoie une commande d'appariement audit dispositif via son détecteur de commande appariement.

Par ailleurs dans un procédé selon l'invention, on produit aussi un signal de commande d'appariement à destination du détecteur de commande d'appariement d'un dispositif maître, et sur détection de celle-ci, l'unité de traitement de données dudit dispositif maître exécute un processus d'appariement comprenant au moins une étape d'enregistrement de chaque identifiant de dispositif selon l'invention de commande par courants porteurs reçu par courants porteurs par ce dispositif maître.

Dans cette autre étape d'un procédé selon l'invention, l'utilisateur met en oeuvre l'appariement d'un dispositif maître et d'un dispositif esclave selon l'invention du côté du dispositif maître, c'est-à-dire qu'il envoie une commande d'appariement à un dispositif maître afin qu'il enregistre les identifiants que ce dernier reçoit de dispositifs esclaves par courants porteurs par le réseau électrique d'alimentation.

Ainsi selon un mode de mise en oeuvre de l'invention, la méthodologie suivie par un utilisateur de l'invention pour apparier un dispositif maître A selon l'invention à un dispositif esclave B selon l'invention consiste à :
1. donner une commande d'appariement au dispositif maître A afin de lui ordonner d'enregistrer chaque identifiant lui parvenant par courants porteurs,
2. donner une commande d'appariement au dispositif esclave B afin de lui ordonner d'émettre au moins un de ses identifiants par courants porteurs,
3. donner une commande d'appariement au dispositif maître A afin de lui ordonner d'arrêter d'enregistrer chaque identifiant lui parvenant par courants porteurs.

Un procédé selon l'invention peut être mis en oeuvre tant avec des dispositifs selon l'invention différenciés, c'est-à-dire uniquement esclave ou uniquement maître, ou avec des dispositifs mixtes adaptés pour assurer les deux fonctions.

Dans le cas de dispositifs selon l'invention différenciés, un procédé d'appariement pour la commande par courants porteurs d'appareils électriques, pour un dispositif maître comprend au moins les étapes suivantes :
- on produit un signal de commande représentatif d'une commande d'appariement à destination du détecteur de commande d'appariement d'un dispositif maître, et sur détection de cette commande d'appariement par ledit détecteur, l'unité de traitement de données du dispositif maître se met dans un mode, dit mode d'appariement maître, dans lequel elle exécute au moins l'enregistrement de chaque identifiant de dispositif de commande par courants porteurs selon l'invention reçu par courants porteurs par ce dispositif maître.

Dans le cas de dispositifs selon l'invention différenciés, un procédé d'appariement pour la commande par courants porteurs d'appareils électriques, pour au moins un dispositif esclave comprend au moins les étapes suivantes :
- on produit un signal de commande représentatif d'une commande d'appariement, à destination du détecteur de commande d'appariement du dispositif esclave, en mode d'appariement esclave du dispositif esclave, et sur détection de cette commande d'appariement par ledit détecteur de commande d'appariement du dispositif esclave, ladite unité de traitement exécute un processus d'appariement comprenant au moins une étape d'émission d'au moins un identifiant du dispositif esclave par courants porteurs sur le réseau électrique d'alimentation.

Dans le cas où des dispositifs mixtes selon l'invention adaptés pour assurer les deux fonctions, donc indifférenciés, sont mis en oeuvre dans un procédé selon l'invention, lesdits dispositifs doivent être adaptés pour être : soit en mode normal, soit en mode d'appariement maître, soit en mode d'appariement esclave.

Avantageusement et selon l'invention un procédé de commande par courants porteurs d'appareils électriques, lors de la mise en oeuvre des étapes 1 à 3 susmentionnées d'une méthodologie suivie par un utilisateur, est caractérisé en ce que successivement :
a. on produit un signal de commande sans fil directionnel représentatif d'une commande d'appariement, à destination du détecteur de commande d'appariement d'un dispositif maître A,
b. sur détection de cette commande d'appariement par ledit détecteur de commande d'appariement du dispositif maître A, l'unité de traitement du dispositif maître A passe dans un mode, dit mode d'appariement maître, et exécute au moins une étape d'émission d'un signal, dit signal de requête, par courants porteurs sur le réseau électrique d'alimentation,
c. sur réception d'un signal de requête l'unité de traitement d'au moins un dispositif esclave B passe dans un mode, dit mode d'appariement esclave,
d. on produit un signal de commande sans fil directionnel représentatif d'une commande d'appariement, à destination du détecteur de commande d'appariement d'un dispositif esclave B,
e. sur détection de cette commande d'appariement par le détecteur de commande d'appariement dudit dispositif esclave B, l'unité de traitement, étant en mode d'appariement esclave, du dispositif esclave B, exécute au moins une étape d'émission d'au moins un identifiant du dispositif esclave B par courants porteurs sur le réseau électrique d'alimentation,
f. l'unité de traitement, en mode d'appariement maître, dudit dispositif maître A reçoit chaque identifiant de dispositif esclave et exécute une étape d'enregistrement dans une mémoire, dite mémoire d'appariement, de chaque identifiant de dispositif esclave reçu par courants porteurs par ce dispositif maître A,
g. on produit un signal de commande sans fil directionnel représentatif d'une commande d'appariement, à destination du détecteur de commande d'appariement dudit dispositif maître A,
h. sur détection de cette commande d'appariement par ledit détecteur de commande d'appariement du dispositif maître A, ladite unité de traitement, en mode d'appariement maître, du dispositif maître A, exécute au moins une étape d'émission d'un signal, dit signal de fin de requête, par courants porteurs sur le réseau électrique d'alimentation, transfert chaque identifiant de dispositif esclave de ladite mémoire d'appariement vers au moins une mémoire non-volatile, et quitte le mode d'appariement maître,
i. sur réception d'un signal de fin de requête par un dispositif esclave B, l'unité de traitement en mode d'appariement esclave dudit dispositif esclave B quitte le mode d'appariement esclave.

Pour l'appariement d'un nombre entier N, supérieur ou égal à 1, de dispositifs esclaves B₁, B₂, ..., B_{N} selon l'invention à un dispositif maître A selon l'invention, les étapes c, d, e, f, i sont reproductibles N fois. Dans ce cas, aux étapes f et h, l'ensemble des N identifiants propres aux dispositifs esclaves B₁, B₂, ..., B_{N} sont respectivement enregistrés dans une mémoire d'appariement du dispositif maître A (étape f), et transférés de ladite mémoire d'appariement à une mémoire non-volatile du dispositif maître A (étape h).

A l'étape g, un signal de commande représentatif d'une commande d'appariement peut être une commande d'appariement à destination du détecteur de commande d'appariement, mais il peut aussi, comme cela a été décrit ci-avant, être de tout autre nature, par exemple : une commande de fin de temporisation, une commande suite à un signal reçu par le module d'entrée, une commande reçue par courants porteurs, ou autre.

Avantageusement et selon l'invention, le signal de commande sans fil directionnel représentatif d'une commande d'appariement est produit manuellement par un utilisateur, par balayage d'un émetteur passif directionnel, à proximité, sans contact et en direction dudit détecteur (4) de commande d'appariement.

L'invention s'étend à un réseau de dispositifs de commande par courants porteurs d'appareils électriques, comprenant au moins deux dispositifs de commande par courants porteurs d'appareils électriques, chacun relié électriquement à un réseau électrique d'alimentation par au moins une connexion électrique, chacun relié électriquement à au moins un appareil électrique branché sur ledit réseau électrique d'alimentation par au moins une connexion électrique, chacun comportant une unité de traitement de données adaptée pour permettre une communication par courants porteurs sur ledit réseau électrique d'alimentation, ladite communication comprenant une transmission d'au moins un identifiant de l'un au moins des dispositifs de commande par courants porteurs sur le réseau électrique d'alimentation, caractérisé en ce qu'au moins deux des dispositifs de commande par courants porteurs d'appareils électriques sont des dispositifs selon l'invention.

En particulier, un tel réseau de dispositifs selon l'invention comprend au moins un dispositif maître selon l'invention et au moins un dispositif esclave selon l'invention, ou au moins un dispositif mixte selon l'invention et au moins un dispositif maître selon l'invention, ou au moins un dispositif mixte selon l'invention et au moins un dispositif esclave selon l'invention, ou au moins deux dispositifs mixtes selon l'invention.

Rien n'empêche selon l'invention de créer un réseau constitué d'au moins deux dispositifs selon l'invention mais aussi d'autres dispositifs de commande par courants porteurs d'appareils électriques.

Avantageusement les dispositifs utilisés sont des dispositifs mixtes selon l'invention, ainsi, par exemple, le réseau est intégralement reconfigurable, et un dispositif selon l'invention précédemment utilisé comme dispositif esclave selon l'invention peut être utilisé comme dispositif maître selon l'invention, et vice-versa. De plus, un tel réseau est reconfigurable sans requérir, pour un utilisateur, ni d'accéder au réseau électrique d'alimentation, ni de modifier son installation électrique, ni de remplacer des dispositifs esclaves par des dispositifs maîtres (ou vice-versa), etc.

De plus, l'ensemble des dispositifs selon l'invention d'un réseau selon l'invention est commandé par un geste générique à l'aide d'une unique télécommande, en particulier à l'aide d'un aimant permanent selon un mode de réalisation de l'invention.

En outre, l'utilisation en réseau de dispositifs selon l'invention permet de les apparier en cascade : un premier dispositif maître ou mixte selon l'invention commande un premier dispositif mixte selon l'invention, qui lui-même commande un second dispositif mixte selon l'invention, etc. Une commande entre appareils électriques, relayée de proche en proche par des dispositifs selon l'invention est donc transmissible sur une distance aussi grande qu'on le souhaite.

Un réseau selon l'invention est simple d'utilisation, reconfigurable facilement et rapidement, sûr, et peu coûteux car il ne nécessite aucune intervention de spécialiste sur le réseau électrique.

L'invention concerne également un dispositif, un procédé ou un réseau caractérisés en combinaison par tout ou partie des caractéristiques mentionnées ci-dessus ou ci-après, notamment un appareil incluant les éléments d'un dispositif décrit ci-dessus et étant apte à mener des procédés d'appariement de même nature que ceux décrits ci-dessus.

D'autres buts, caractéristiques et avantages de l'invention apparaîtront à la lecture de la description suivante donnée à titre non limitatif et qui se réfère aux figures annexées dans lesquelles :
- les figures 1a et 1b sont des représentations schématiques fonctionnelles de dispositifs selon l'invention, respectivement un dispositif maître (figure 1a) et un dispositif esclave (figure 1b), reliés à un réseau électrique d'alimentation,
- la figure 2 est une représentation schématique détaillée des principaux éléments constitutifs d'un dispositif mixte selon l'invention pouvant être à la fois maître et esclave,
- la figure 3 est une représentation schématique d'un réseau électrique comportant une alimentation électrique, un dispositif maître M selon l'invention relié à un premier appareil électrique Ap1, et deux dispositifs esclaves (S1,S2) selon l'invention chacun relié à un appareil électrique (respectivement Ap2, Ap3),
- la figure 4 est un organigramme représentant un procédé d'appariement selon l'invention entre un dispositif maître (colonne de gauche) et un dispositif esclave (colonne de droite) ainsi que les échanges de signaux par courants porteurs intervenant entre ces deux dispositifs au cours du procédé d'appariement.

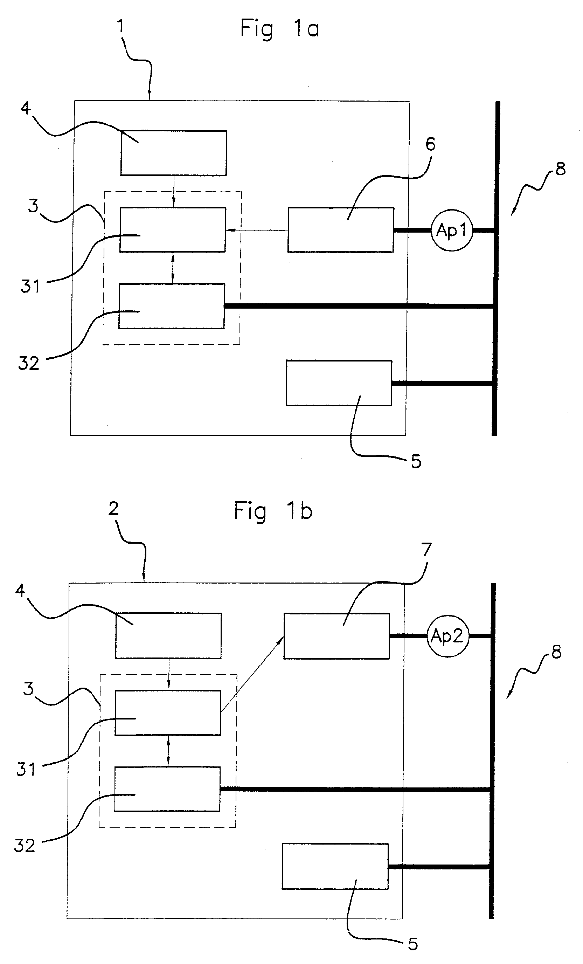

Dans un mode de réalisation particulier d'un dispositif maître de commande par courants porteurs d'appareils électriques selon l'invention tel que représenté sur la figure 1a, un tel dispositif comporte au moins :
- des moyens d'alimentation 5 en énergie électrique reliés à un réseau 8 électrique d'alimentation,
- une unité 3 de traitement de données reliée à un réseau 8 électrique d'alimentation,
- un détecteur 4 de commande d'appariement, notamment un capteur 4 à effet Hall,
- un module 6 d'entrée relié électriquement à un premier appareil électrique Ap1.

Dans un mode de réalisation particulier d'un dispositif esclave de commande par courants porteurs d'appareils électriques selon l'invention tel que représenté sur la figure 1b, un tel dispositif comporte au moins :
- des moyens d'alimentation 5 en énergie électrique reliés à un réseau 8 électrique d'alimentation,
- une unité 3 de traitement de données reliée à un réseau 8 électrique d'alimentation,
- un détecteur 4 de commande d'appariement, notamment un capteur 4 à effet Hall,
- un module 7 de sortie relié électriquement à un second appareil électrique Ap2.

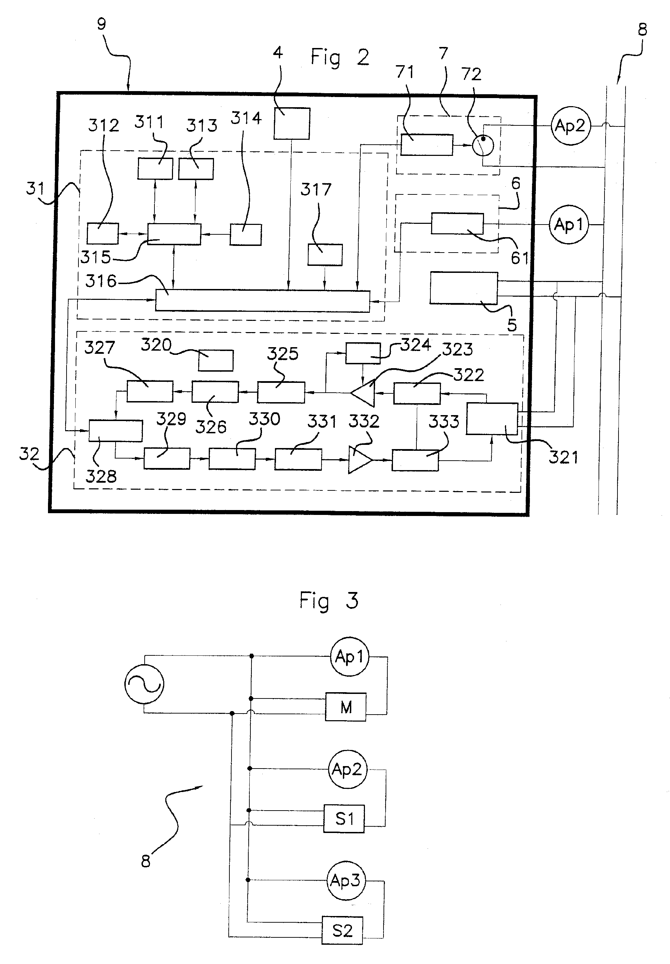

Dans un mode de réalisation particulier d'un dispositif 9 mixte de commande par courants porteurs d'appareils électriques selon l'invention tel que représenté sur la figure 2, un tel dispositif comporte au moins :
- des moyens d'alimentation 5 en énergie électrique reliés à un réseau 8 électrique d'alimentation,
- une unité 3 de traitement de données reliée à un réseau 8 électrique d'alimentation,
- un détecteur 4 de commande d'appariement, notamment un capteur 4 à effet Hall,
- un module 6 d'entrée relié électriquement à un premier appareil électrique Ap1,
- un module 7 de sortie relié électriquement à un second appareil électrique Ap2.

Dans un mode de réalisation particulier de l'invention l'appareil électrique Ap1 est un interrupteur, et le module 6 d'entrée est un simple détecteur de la fermeture de l'interrupteur, par exemple un capteur de tension électrique.

Dans un mode de réalisation particulier de l'invention, le module 7 de sortie comporte unité de commande d'un interrupteur commandé relié à l'unité 3 de traitement de données, et un interrupteur commandé.

L'unité 3 de traitement de données comporte en particulier deux composants fonctionnels :
- une unité 31 de calcul et de mémorisation,
- des moyens 32 de communication par courants porteurs, tel qu'un modem 32 de communication par courants porteurs.

Une unité 31 de calcul et de mémorisation comporte notamment :
- une mémoire 313 volatile de type FLASH,
- une mémoire 311 d'appariement volatile de type RAM,
- une mémoire 312 inscriptible non volatile de type EEPROM, contenant des données logiques nécessaires au fonctionnement du dispositif, apte à enregistrer des identifiants de dispositifs selon l'invention, et contenant au moins un identifiant propre au dispositif,
- un microprocesseur 315,
- un oscillateur 314,
- un contrôleur d'entrées/sorties 316,
- une LED 317, pouvant servir d'interface avec un utilisateur sur l'état du dispositif (mode normal, mode d'appariement, détection d'une commande d'appariement, etc.).

En fonction de l'utilisation qu'on souhaite faire d'un dispositif selon l'invention, et notamment du nombre de dispositifs selon l'invention qu'on souhaite utiliser sur un même réseau électrique d'alimentation, on choisit le nombre de bits sur lequel un identifiant de dispositif selon l'invention est codé, et par conséquent la taille des mémoires (311, 312, 313) et éventuellement la puissance de calcul du microprocesseur 315. L'identifiant complet d'un dispositif selon l'invention peut être une combinaison d'identifiants afin de pouvoir utiliser un plus grand nombre de dispositifs sur un même réseau électrique d'alimentation.

Un modem de communication par courants porteurs peut être quelconque. Par exemple, il peut comporter :
- un oscillateur 320,
- une interface 328 avec le contrôleur d'entrées/sorties 316 de l'unité 31 de calcul et de mémorisation,
- un filtre 321 haute tension en amont de la chaîne de réception et en aval de la chaîne d'émission, directement monté sur les moyens de connexion avec un réseau électrique d'alimentation, par exemple de type inductance et condensateur (LC),
- une chaîne de réception et d'extraction des données reçues par onde porteuse comportant successivement :
   - un filtre d'entrée 322,
   - un amplificateur de réception 323 contrôlé par un ajusteur de gains automatiques 324,
   - un démodulateur permettant d'extraire les données numériques reçues 325,
   - un filtre numérique 326,
   - une boucle à verrouillage de phases 327,
- une chaîne de modulation et d'émission de données par courants porteurs comportant successivement :
   - un modulateur 329,
   - un convertisseur analogique-numérique 330,
   - un filtre permettant de lisser les fronts de communication en sortie du convertisseur 331,
   - un amplificateur de puissance 332,
   - un filtre sur la fréquence porteuse 333.

La figure 3 représente la mise en oeuvre de trois dispositifs selon l'invention montés sur un réseau 8 électrique d'alimentation :
- un dispositif 1 maître M, monté en série avec un premier appareil électrique Ap1,
- un dispositif 2 esclave S1, monté en série avec un deuxième appareil électrique Ap2,
- un dispositif 2 esclave S2, monté en série avec un troisième appareil électrique Ap3.

L'avantage d'un dispositif selon l'invention est de permettre une reconfiguration simple et rapide d'un réseau de dispositifs maîtres et esclaves. Ainsi très simplement, un utilisateur peut reconfigurer le réseau de la figure 3. Un utilisateur peut ainsi décider :
- d'apparier le fonctionnement de l'appareil Ap1 aux appareils Ap2 et Ap3,
- d'apparier le fonctionnement de l'appareil Ap1 à l'appareil Ap2, l'appareil Ap1 n'a alors aucun effet sur l'appareil Ap3,
- d'apparier le fonctionnement de l'appareil Ap1 à l'appareil Ap3, l'appareil Ap1 n'a alors aucun effet sur l'appareil Ap2,
- ou de n'apparier le fonctionnement de l'appareil Ap1 à aucun des appareils Ap2 ou Ap3.

Un tel réseau de dispositifs de commande par courants porteurs d'appareils électriques selon l'invention et de telles possibilités de reconfiguration des appariements de dispositifs maîtres et esclaves peut être réalisé avec un nombre quelconque de dispositifs maîtres selon l'invention et/ou de dispositifs esclaves selon l'invention, à condition qu'il existe un nombre d'identifiants suffisamment grand pour qu'il n'existe pas de confusion entre dispositifs selon l'invention, c'est-à-dire pour que chacun des dispositifs selon l'invention montés sur le même réseau électrique d'alimentation disposent d'un identifiant unique par rapport aux autres dispositifs selon l'invention dudit réseau.

Par ailleurs, si l'utilisateur remplace le dispositif 2 esclave S1 par un dispositif 9 pouvant être à la fois maître et esclave, qu'il configure le dispositif 1 maître M pour commander ce dit dispositif 9 pouvant être à la fois maître esclave, et que ce dernier est configuré pour commander le dispositif 2 esclave S2, on obtient alors une chaîne de dispositifs de commande par courants porteurs d'appareils électriques en cascade. En effet le fonctionnement de l'appareil Ap1 influera sur le fonctionnement de l'appareil Ap2 dont le fonctionnement influera lui-même sur le fonctionnement de l'appareil Ap3.

De multiples variantes de réalisation du mode normal d'un dispositif selon l'invention sont envisageables, qu'ils soient différenciés en maîtres ou en esclaves, ou qu'ils soient mixtes et puissent assumer les deux fonctions. On définit les fonctionnalités de tels dispositifs, en mode normal, en fonction de l'usage qu'il souhaite en faire.

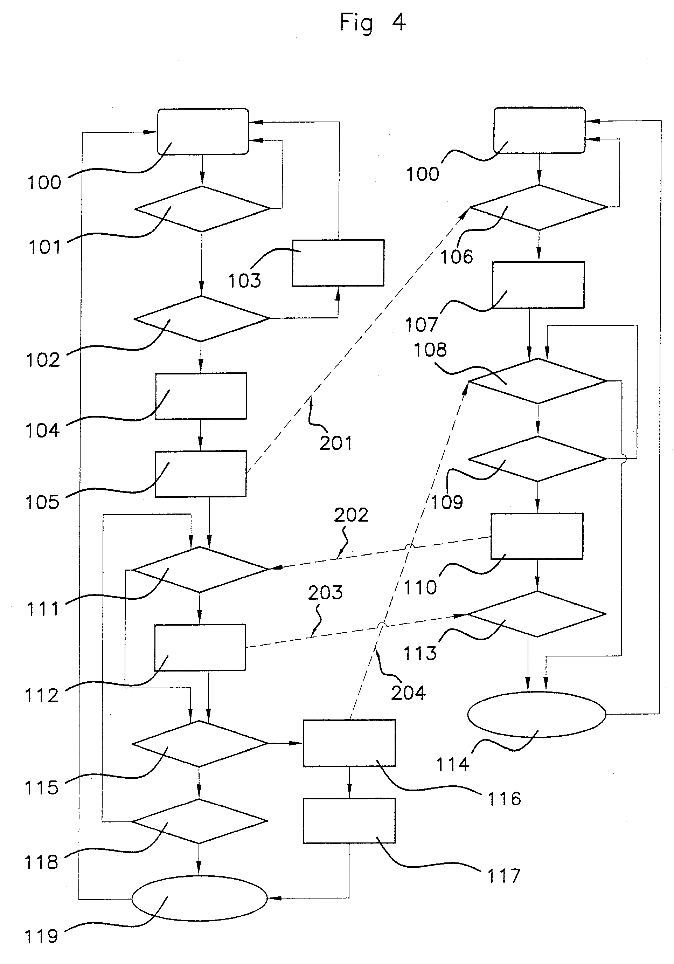

La figure 4 représente un mode de réalisation d'un procédé d'appariement d'un dispositif maître à un dispositif esclave selon l'invention. Dans la partie gauche de la figure 4 sont représentées les étapes d'appariement suivies par un dispositif 9 indifférencié dans sa fonction de maître. Dans la partie droite de la figure 4 sont représentées des étapes d'appariement effectué par un dispositif 9 indifférencié dans sa fonction d'esclave.

Avant la mise en oeuvre du procédé d'appariement, le dispositif 9 maître et le dispositif 9 esclave sont en mode normal 100.

La mise en oeuvre du procédé d'appariement d'un dispositif 9 maître et d'un dispositif 9 esclave comprend successivement des étapes dans lesquelles :
101. le dispositif maître est en attente d'une commande d'appariement, via son détecteur 4 de commande d'appariement ; si un utilisateur donne une commande d'appariement, notamment s'il effectue un mouvement de balayage avec un aimant permanent devant un capteur 4 à effet Hall, une minuterie est enclenchée par l'unité 3 de traitement de données et le dispositif maître passe à l'étape 102 ; tant qu'aucune commande d'appariement n'est détectée par le détecteur 4 de commande d'appariement, le dispositif maître reste en mode normal 100,
102. la durée de détection d'un aimant permanent est comparé à une valeur représentant une durée th1 de seuil enregistrée dans une mémoire non volatile 312, et si la durée de détection d'un aimant permanent est supérieure à th1, alors le dispositif maître passe à l'étape 103, si la durée de détection d'un aimant permanent est inférieure à th1, le dispositif maître passe à l'étape 104,
103. l'ensemble des identifiants d'esclaves enregistrés dans une mémoire non volatiles 312 sont effacés,
104. le dispositif maître entre en mode d'appariement maître, et enclenche une minuterie,
105. le dispositif maître envoi un signal de requête 201 sur le réseau 8 électrique d'alimentation, représentant pour tous les dispositifs selon l'invention une information selon laquelle ce dispositif maître est en mode d'appariement maître, puis le dispositif maître passe à l'étape 111,
106. un dispositif esclave selon l'invention reçoit le signal de requête 201 et vérifie qu' il s'agit bien d'un signal de requête ; s'il ne s'agit pas d'un signal de requête, ledit dispositif esclave revient en mode normal 100 ; s'il s'agit bien d'un signal de requête, le dispositif esclave passe à l'étape 107,
107. le dispositif esclave passe en mode d'appariement esclave, et enclenche une minuterie, puis il passe à l'étape 108,
108. le dispositif esclave est en attente d'un signal 204 de fin de requête et compare le délai enregistré par la minuterie enclenchée à l'étape 107 à une valeur représentative d'une durée th2 de seuil enregistrée dans une mémoire non volatile ; si le délai enregistré par la minuterie enclenchée à l'étape 107 est inférieure à la valeur th2 et tant qu'aucun signal 204 de fin de requête n'est reçu, le dispositif esclave passe à l'étape 109 ; si le délai enregistré par la minuterie enclenchée à l'étape 107 est supérieure à th2 ou si un signal 204 de fin de requête est reçu, alors le dispositif esclave passe à l'étape 114,
109. le dispositif esclave est en attente d'une commande d'appariement, via son détecteur de commande d'appariement ; si un utilisateur donne une commande d'appariement, notamment s'il effectue un mouvement de balayage avec un aimant permanent devant un capteur 4 à effet Hall, le dispositif esclave passe à l'étape 110 ; tant qu'aucune commande d'appariement n'est détectée par le détecteur de commande d'appariement, le dispositif esclave passe à l'étape 108,
110. le dispositif esclave envoie un signal 202 par courants porteurs contenant au moins l'un de ses identifiants stocké dans une mémoire non volatile 312, et le dispositif esclave passe à l'étape 113,
111. le dispositif maître est en attente de la réception de signaux par courants porteurs contenant au moins un identifiant de dispositif esclave ; s'il détecte un signal contenant au moins un identifiant de dispositif esclave, le dispositif maître passe à l'étape 112 ; tant que le dispositif maître ne détecte aucun signal contenant au moins un identifiant de dispositif esclave, il passe à l'étape 115,
112. le dispositif maître enregistre l' (les)identifiant(s) de dispositif esclave contenu(s) dans le signal 202 dans une mémoire volatile de type RAM 311, et émet un signal, dit signal de reconnaissance 203, contenant au moins un identifiant de dispositif esclave qu'il a reçu à l'étape 111 précédente, puis passe à l'étape 115,
113. le dispositif esclave est en attente d'un signal de reconnaissance 203 contenant au moins l'un de ses identifiants ; tant qu'il ne reçoit pas de signal de reconnaissance 203 il reste à l'étape 113 ; s'il reçoit le signal de reconnaissance 203 contenant au moins l'un de ses identifiants, le dispositif esclaves passe à l'étape 114,
114. le dispositif esclave sort du mode d'appariement esclave et retourne en mode normal 100,
115. le dispositif maître est en attente d'une commande d'appariement, via son détecteur de commande d'appariement ; si un utilisateur donne de commande d'appariement, notamment s'il effectue un mouvement de balayage avec un aimant permanent devant un capteur 4 à effet Hall, le dispositif maître passe à l'étape 116 ; si aucune commande d'appariement n'est détectée, le dispositif maître passe à l'étape 118,
116. le dispositif maître envoie un signal 204 de fin de requête par courants porteurs sur le réseau électrique d'alimentation, et passe à l'étape 117,
117. le dispositif maître efface chaque identifiant de dispositif esclave contenu dans la mémoire non volatile de type EEPROM 312, et transfert chaque identifiant de dispositif esclave contenu dans la mémoire volatile RAM 311 vers la mémoire non volatile de type EEPROM 312, puis le dispositif maître passe à l'étape 119,
118. le dispositif maître compare la valeur de la durée mesurée par la minuterie enclenchée à l'étape 104 à une valeur représentative d'une durée th3 de seuil enregistrée dans une mémoire non volatile de type EEPROM 312 et est en attente, via son module d'entrée, d'un changement d'état de l'appareil électrique auquel le dispositif maître est électriquement relié ; si la valeur de ladite durée est inférieure à th3 et si aucun changement d'état de l'appareil électrique n'est détecté, le dispositif maître passe à l'étape 111 ; si la valeur de ladite durée est supérieure à th3 ou si un changement d'état de l'appareil électrique est détecté par le module d'entrée, alors le dispositif maître passe à l'étape 119,
119. Le dispositif maître sort du mode d'appariement maître et revient en mode normal 100.

Lors de l'appariement d'une pluralité de dispositifs esclaves au dispositif maître, ledit dispositif maître renouvelle les étapes 111 et 112 chaque fois qu'un nouveau dispositif esclave lui communique au moins l'un de ses identifiants par un signal 202. A l'étape 117 le dispositif maître remplace le(les) identifiant(s) de dispositifs esclave précédemment enregistrés par les identifiants de la pluralité de dispositif esclaves.

L'invention s'étend à un dispositif compatible avec la mise en oeuvre d'un tel procédé selon l'invention. L'invention peut faire l'objet de nombreuses autres variantes de réalisation non représentées.

En particulier, il est possible que deux dispositifs esclaves comportent le même numéro d'identifiant attribué en usine. On peut alors utiliser, en plus de l'identifiant attribué en usine, la minuterie enclenchée par l'unité 3 de traitement du dispositif esclave lors de l'étape 107. Lorsqu'un dispositif esclave reçoit une commande d'appariement, il envoie son identifiant et la valeur indiquée par la minuterie. La combinaison de son identifiant attribué en usine et la valeur indiquée par la minuterie au moment de son appariement constituent un identifiant complet auprès du dispositif maître qui enregistrera, pour chaque dispositifs esclaves, l'identifiant d'usine du dispositif esclaves et la valeur indiquée par la minuterie au moment de l'appariement dispositif esclaves au dispositif maître.

Par ailleurs, l'ensemble des identifiants de dispositifs esclaves peut être stockés en mémoire non-volatile 312 d'un dispositif maître. Ainsi lors de la configuration du dispositif maître, seules les informations d'appariement sont adjointes à chaque identifiant de dispositif esclave en mémoire, permettant de savoir si tel ou tel dispositif esclave est apparié ou non au dispositif maître. Ce mode de mise en oeuvre particulier des dispositifs maîtres et esclave reste toutefois moins souple lorsque de nouveaux dispositifs sont ajoutés sur le réseau électrique.

En outre, un dispositif selon l'invention n'est pas nécessairement monté électriquement en série avec un appareil électrique, c'est-à-dire qu'il ne contrôle pas nécessairement seulement l'alimentation en énergie électrique dudit appareil électrique. Il est aussi envisageable d'utiliser un dispositif de commande par courants porteurs d'appareils électriques selon l'invention dans le but de contrôler d'autres fonctionnalités d'un appareil électrique.

Un dispositif selon l'invention est facile à installer. Notamment l'installation de dispositifs mixtes selon l'invention ne requiert pas la connaissance d'un spécialiste pour faire la distinction entre dispositifs maîtres et dispositifs esclaves. De plus un dispositif selon l'invention comporte avantageusement seulement trois connexions électriques : une vers chacune des phases d'un réseau électrique d'alimentation biphasé, plus une vers l'appareil électrique.

Un dispositif selon l'invention est peu coûteux. En effet, la fabrication d'un dispositif unique mixte selon l'invention permet de réaliser des économies de production par effet d'échelle. De plus un dispositif selon l'invention est réalisable à partir de composants électroniques simples et peu coûteux, notamment un détecteur de commande d'appariement simple et peu coûteux tel qu'un capteur à effet Hall.

Un dispositif selon l'invention est non-dangereux. En effet, une fois connectée électriquement, un utilisateur n'a pas besoin d'accéder au réseau électrique d'alimentation ou à toute autre connexion électrique pour la configuration ou la reconfiguration des appariements entre dispositifs selon l'invention. De plus un dispositif selon l'invention est électriquement isolé, et il peut être réalisé de telle manière à être résistant à l'humidité. Ainsi un dispositif selon l'invention répond aux normes de sécurité électrique.

Un dispositif selon l'invention est robuste. En effet, un dispositif selon l'invention peut être réalisé de telle manière à être résistant à l'humidité, mais aussi aux chocs, notamment lorsqu'il est inclut dans une résine qui l'enrobe.

Un dispositif selon l'invention est compact. En effet, la compacité des composants électroniques utilisés permet à un dispositif selon l'invention d'être contenu dans un volume réduit, notamment dans un parallélépipède de dimensions inférieures à 40 mm x 40 mm x 10 mm. La compacité d'un dispositif selon l'invention permet de l'installer à l'intérieur des boîtiers électriques disponibles dans le commerce.

## Revendications

1. Dispositif (1, 2, 9) de commande par courants porteurs d'appareils (Ap1, Ap2) électriques, comportant une connexion électrique à un réseau (8) électrique d'alimentation, une connexion électrique à au moins un appareil électrique branché sur ledit réseau électrique d'alimentation, une unité (3) de traitement de données adaptée pour permettre une communication par courants porteurs sur ledit réseau électrique d'alimentation entre le dispositif (1, 2, 9) et au moins un autre dispositif (1, 2, 9) de commande par courants porteurs connecté au même réseau électrique d'alimentation, ladite communication comprenant une transmission d'au moins un identifiant de l'un au moins des dispositifs de commande par courants porteurs sur le réseau (8) électrique d'alimentation,
**caractérisé :**
- **en ce qu'**il comporte au moins un détecteur (4) de champ magnétique, dit détecteur (4) de commande d'appariement, sensible à au moins un signal directionnel magnétique de commande d'appariement émis sans fil et sans contact par balayage d'un émetteur passif et directionnel de signal de télécommande du détecteur (4) de commande d'appariement à proximité de ce dernier, ledit détecteur (4) de commande d'appariement étant connecté à l'unité (3) de traitement de données,
- **en ce qu'**il comprend une protection périphérique d'isolation électrique,
- et **en ce que** ladite unité (3) de traitement de données est adaptée pour pouvoir exécuter, sur détection, par ledit détecteur (4) de commande d'appariement, d'un signal de commande représentatif d'une commande d'appariement, au moins un processus d'appariement du dispositif de commande par courants porteurs avec au moins un autre dispositif (1, 2, 9) de commande par courants porteurs connecté au même réseau (8) électrique d'alimentation, ledit processus d'appariement comprenant :
▪ au moins une étape d'émission par courants porteurs sur le réseau (8) électrique d'alimentation d'au moins un identifiant de l'un au moins, dit dispositif (2, 9) esclave, des dispositifs (1, 2, 9) de commande par courants porteurs,
▪ au moins une étape d'enregistrement par l'un au moins un dispositif, dit dispositif (1, 9) maître, des dispositifs (1, 2, 9) de commande par courants porteurs, de chaque identifiant reçu par courants porteurs par ce dispositif (1, 9) maître.

2. Dispositif selon la revendication 1 **caractérisé en ce que** ledit détecteur (4) de commande d'appariement est un capteur à effet Hall.

3. Dispositif selon l'une des revendications 1 ou 2, **caractérisé, en outre en ce que** :
- il comporte un module, dit module (7) de sortie, connecté à au moins un appareil (Ap2) électrique par ladite connexion électrique avec au moins un appareil électrique, et adapté pour commander ledit appareil (Ap2) électrique,
- ladite unité (3) de traitement de données est adaptée pour pouvoir exécuter au moins un processus d'appariement comprenant au moins une étape d'émission par courants porteurs sur le réseau (8) électrique d'alimentation d'au moins un identifiant du dispositif (2, 9),
de sorte qu'il constitue un dispositif (2, 9) esclave.

4. Dispositif selon l'une des revendications 1 ou 2, **caractérisé en outre en ce que** :
- il comporte un module, dit module (6) d'entrée, connecté à au moins un appareil (Ap1) électrique par ladite connexion électrique avec au moins un appareil électrique, et adapté pour détecter un changement d'état de l'appareil (Ap1) électrique auquel il est connecté,
- ladite unité (3) de traitement de données est adaptée pour pouvoir exécuter au moins un processus d'appariement comprenant au moins une étape d'enregistrement dans une mémoire, dite mémoire (311) d'appariement, dudit dispositif (1, 9), de chaque identifiant reçu par courants porteurs,
de sorte qu'il constitue un dispositif (1, 9) maître.

5. Dispositif selon l'une des revendications 1 ou 2, **caractérisé en outre en ce que** :
- il comporte un module, dit module (6) d'entrée, connecté à au moins un appareil (Ap1) électrique par ladite connexion électrique avec au moins un appareil électrique, et adapté pour détecter un changement d'état de l'appareil (Ap1) électrique auquel il est connecté,
- il comporte un module, dit module (7) de sortie, connecté à au moins un appareil (Ap2) électrique par ladite connexion électrique avec au moins un appareil électrique, et adapté pour commander ledit appareil (Ap2) électrique,
- ladite unité (3) de traitement de données est adaptée pour pouvoir exécuter, sur réception par ledit détecteur (4) de commande d'appariement, d'au moins un signal de commande, au moins un processus d'appariement comprenant :
▪ au moins une étape d'activation ou de désactivation d'un mode, dit mode d'appariement maître, du dispositif (9), et
▪ au moins une étape d'émission d'un signal, dit signal de requête, par courants porteurs sur le réseau (8) électrique d'alimentation,
- ladite unité (3) de traitement de données est adaptée pour pouvoir exécuter, sur réception par courants porteurs d'un signal de requête d'un autre dispositif (1, 9) de commande par courants porteurs connecté au même réseau (8) électrique d'alimentation, au moins un processus comprenant :
▪ au moins une étape d'activation d'un mode, dit mode d'appariement esclave, du dispositif (9),
- ladite unité (3) de traitement de données est adaptée pour pouvoir exécuter, en mode d'appariement esclave et sur réception par ledit détecteur (4) de commande d'appariement, d'au moins un signal de commande représentatif d'une commande d'appariement, au moins un processus d'appariement dudit dispositif (9) avec au moins un autre dispositif (1, 9) de commande par courants porteurs connecté au même réseau (8) électrique d'alimentation, ledit processus d'appariement comprenant au moins une étape d'émission par courants porteurs sur le réseau (8) électrique d'alimentation d'au moins un identifiant du dispositif (9),
- ladite unité (3) de traitement de données est adaptée pour pouvoir exécuter, en mode d'appariement maître et sur réception d'au moins un identifiant d'au moins un autre dispositif (2, 9) de commande par courants porteurs, au moins un processus d'appariement comprenant au moins une étape d'enregistrement dans une mémoire, dite mémoire (311) d'appariement, par ledit dispositif (9) de chaque identifiant reçu par courants porteurs.

6. Procédé de commande par courants porteurs d'appareils (Ap1, Ap2) électriques, dans lequel on connecte électriquement à un réseau (8) électrique d'alimentation au moins deux dispositifs (1, 2, 9) de commande par courants porteurs, grâce à leurs moyens de connexion électrique à un réseau (8) électrique d'alimentation, on connecte électriquement chacun des dispositifs (1, 2, 9) à au moins un appareil (Ap1, Ap2) électrique branché sur ledit réseau (8) électrique d'alimentation grâce à leurs moyens de connexion à un appareil électrique, lesdits dispositif (1, 2, 9) de commande par courants porteurs comportant au moins une unité (3) de traitement de données adaptée pour permettre une communication par courants porteurs sur ledit réseau électrique d'alimentation, entre lesdits dispositifs (1, 2, 9) de commande par courants porteurs, ladite communication comprenant une transmission d'au moins un identifiant de l'un au moins des dispositifs (1, 2, 9) de commande par courants porteurs sur le réseau électrique d'alimentation,
**caractérisé en ce que** :
- on choisit chaque dispositif (1, 2, 9) de commande par courants porteurs équipé d'au moins un détecteur, dit détecteur (4) de commande d'appariement, relié à ladite unité (3) de traitement du dispositif de commande par courants porteurs et adapté pour pouvoir recevoir et détecter au moins un signal directionnel magnétique de commande d'appariement émis sans fil et sans contact par balayage d'un émetteur passif et directionnel de signal de télécommande du détecteur (4) de commande d'appariement à proximité de ce dernier
- on produit un signal de commande magnétique sans fil directionnel représentatif d'une commande d'appariement, par balayage d'un émetteur passif et directionnel de signal de télécommande à proximité du détecteur (4) de commande d'appariement d'au moins l'un desdits dispositifs de commande par courants porteurs, dit dispositif (2, 9) esclave, et sur détection de cette commande d'appariement par ledit détecteur (4) de commande d'appariement du dispositif (2, 9) esclave, ladite unité de traitement de données du dispositif esclave exécute un processus d'appariement comprenant au moins une étape d'émission par courants porteurs sur le réseau (8) électrique d'alimentation d'au moins un identifiant du dispositif esclave,
- on produit un signal de commande magnétique sans fil directionnel représentatif d'une commande d'appariement, par balayage d'un émetteur passif et directionnel de signal de télécommande à proximité du détecteur (4) de commande d'appariement d'au moins un autre desdits dispositifs de commande par courants porteurs, dit dispositif (1, 9) maître, et sur détection de cette commande d'appariement par ledit détecteur (4) de commande d'appariement du dispositif maître, ladite unité (3) de traitement de données du dispositif maître, exécute un processus d'appariement comprenant au moins une étape d'enregistrement de chaque identifiant de dispositif de commande par courants porteurs reçu par courants porteurs par ce dispositif maître.

7. Procédé selon la revendication 6 **caractérisé en ce que**, successivement :
a. on produit un signal de commande sans fil directionnel représentatif d'une commande d'appariement, à destination du détecteur (4) de commande d'appariement d'un dispositif (1, 9) maître,
b. sur détection de cette commande d'appariement par ledit détecteur de commande d'appariement du dispositif (1, 9) maître, l'unité (3) de traitement du dispositif maître se met dans un mode, dit mode d'appariement maître, et exécute au moins une étape d'émission d'un signal, dit signal de requête, par courants porteurs sur le réseau (8) électrique d'alimentation,
c. sur réception d'un signal de requête l'unité de traitement d'au moins un dispositif (2, 9) esclave se met dans un mode, dit mode d'appariement esclave,
d. on produit un signal de commande sans fil directionnel représentatif d'une commande d'appariement, à destination du détecteur (4) de commande d'appariement d'un dispositif (2, 9) esclave,
e. sur détection de cette commande d'appariement par le détecteur (4) de commande d'appariement dudit dispositif esclave, l'unité de traitement, étant en mode d'appariement esclave, du dispositif esclave, exécute au moins une étape d'émission d'au moins un identifiant du dispositif (2, 9) esclave par courants porteurs sur le réseau (8) électrique d'alimentation,
f. l'unité (3) de traitement, en mode d'appariement maître, dudit dispositif (1, 9) maître reçoit chaque identifiant de dispositif (2, 9) esclave et exécute une étape d'enregistrement dans une mémoire, dite mémoire (311) d'appariement, de chaque identifiant de dispositif esclave reçu par courants porteurs par ce dispositif maître,
g. on produit un signal de commande sans fil directionnel représentatif d'une commande d'appariement, à destination du détecteur (4) de commande d'appariement dudit dispositif (1, 9) maître,
h. sur détection de cette commande d'appariement par ledit détecteur (4) de commande d'appariement du dispositif maître, ladite unité (3) de traitement, en mode d'appariement maître, du dispositif maître, exécute au moins une étape d'émission d'un signal, dit signal de fin de requête, par courants porteurs sur le réseau (8) électrique d'alimentation, transfert chaque identifiant de dispositif esclave de ladite mémoire (311) d'appariement vers au moins une mémoire (312) non-volatile, et quitte le mode d'appariement maître,
i. sur réception d'un signal de fin de requête par un dispositif (2, 9) esclave, l'unité (3) de traitement en mode d'appariement esclave dudit dispositif esclave quitte le mode d'appariement esclave.

8. Procédé selon l'une des revendications 6 ou 7, **caractérisé en ce que** le signal de commande sans fil directionnel représentatif d'une commande d'appariement est produit manuellement par un utilisateur, par balayage d'un émetteur passif directionnel, à proximité, sans contact et en direction dudit détecteur (4) de commande d'appariement.

9. Réseau de dispositifs (1, 2, 9) de commande par courants porteurs d'appareils (Ap1, Ap2) électriques, comprenant au moins deux dispositifs (1, 2, 9) de commande par courants porteurs d'appareils électriques, chacun relié électriquement à un réseau (8) électrique d'alimentation par au moins une connexion électrique, chacun relié électriquement à au moins un appareil (Ap1, Ap2) électrique branché sur ledit réseau (8) électrique d'alimentation par au moins une connexion électrique, chacun comportant une unité (3) de traitement de données adaptée pour permettre une communication par courants porteurs sur ledit réseau (8) électrique d'alimentation, ladite communication comprenant une transmission d'au moins un identifiant de l'un au moins des dispositifs (1, 2, 9) de commande par courants porteurs sur le réseau (8) électrique d'alimentation, **caractérisé en ce qu'**au moins deux des dispositifs (1, 2, 9) de commande par courants porteurs d'appareils électriques sont des dispositifs selon l'une des revendications 1 à 5.

## Patentansprüche

1. Trägerstrom-Steuervorrichtung (1, 2, 9) für Elektrogeräte (Ap1, Ap2), einen elektrischen Anschluss an ein Stromversorgungsnetz (8) umfassend, einen elektrischen Anschluss an zumindest ein Elektrogerät, das mit dem besagten Stromversorgungsnetz verbunden ist, eine Einheit (3) zur Datenverarbeitung, die sich dazu eignet, um eine Kommunikation über Trägerströme im besagten Stromversorgungsnetz zwischen der Vorrichtung (1, 2, 9) und zumindest einer anderen Trägerstrom-Steuervorrichtung (1, 2, 9) zu ermöglichen, die an dasselbe Stromversorgungsnetz angeschlossen ist, wobei die besagte Kommunikation eine Übertragung von zumindest einer Identifizierung der zumindest einen der Trägerstrom-Steuervorrichtungen im Stromversorgungsnetz (8) umfasst,
**dadurch gekennzeichnet:**
- **dass** sie zumindest einen Magnetfelddetektor (4) umfasst, der Paarungssteuerungsdetektor (4) genannt wird, und der empfindlich für zumindest ein gerichtetes magnetisches Steuersignal zum Paaren ist, das drahtlos und kontaktlos durch Abtasten eines passiven und gerichteten Fernsteuersignalsenders des Paarungssteuerungsdetektors (4) in der Nähe von letzterem ausgesandt wird, wobei der besagte Paarungssteuerungsdetektor (4) mit der Einheit (3) zur Datenverarbeitung verbunden ist,
- **dass** sie einen periphären elektrischen Isolierungsschutz umfasst,
- **dass** sich die besagte Einheit (3) zur Datenverarbeitung dazu eignet, um nach der Erkennung eines repräsentativen Steuersignals einer Paarungssteuerung durch den besagten Paarungssteuerungsdetektor (4) zumindest einen Paarungsvorgang der Trägerstrom-Steuervorrichtung mit zumindest einer anderen Trägerstrom-Steuervorrichtung (1, 2, 9) vornehmen zu können, die an dasselbe Stromversorgungsnetz (8) angeschlossen ist, wobei der besagte Paarungsvorgang folgendes umfasst:
-- zumindest einen Schritt zum Senden einer Identifizierung der zumindest einen der Trägerstrom-Steuervorrichtungen (1, 2, 9), die Slave-Vorrichtung (2, 9) genannt wird, durch die Trägerströme ins Stromversorgungsnetz (8),
-- zumindest einen Schritt zum Speichern einer jeden Identifizierung durch zumindest eine Vorrichtung der Trägerstrom-Steuervorrichtungen (1, 2, 9), die Master-Vorrichtung (1, 9) genannt wird, die von dieser Master-Vorrichtung (1, 9) über die Trägerströme empfangen wurde.

2. Vorrichtung nach Anspruch 1, **dadurch gekennzeichnet, dass** der besagte Paarungssteuerungsdetektor (4) ein Hall-Sensor ist.

3. Vorrichtung nach einem der Ansprüche 1 oder 2, darüber hinaus **dadurch gekennzeichnet, dass**:
- sie ein Modul umfasst, das Ausgangsmodul (7) genannt wird, das über den besagten elektrischen Anschluss mit zumindest einem Elektrogerät an zumindest ein Elektrogerät (Ap2) angeschlossen ist, und sich dazu eignet, um das besagte Elektrogerät (Ap2) zu steuern,
- sich die besagte Einheit (3) zur Datenverarbeitung dazu eignet, um zumindest einen Paarungsvorgang durchführen zu können, der zumindest einen Schritt zum Senden zumindest einer Identifizierung der Vorrichtung (2, 9) über die Trägerströme ins Stromversorgungsnetz (8) umfasst,
um eine Slave-Vorrichtung (2, 9) darzustellen.

4. Vorrichtung nach einem der Ansprüche 1 oder 2, darüber hinaus **dadurch gekennzeichnet, dass**:
- sie ein Modul umfasst, das Eingangsmodul (6) genannt wird, das über den besagten elektrischen Anschluss mit zumindest einem Elektrogerät an zumindest ein Elektrogerät (Ap1) angeschlossen ist, und sich dazu eignet, um eine Statusänderung des Elektrogerätes (Ap1) zu erkennen, mit dem es verbunden ist,
- sich die besagte Einheit (3) zur Datenverarbeitung dazu eignet, um zumindest einen Paarungsvorgang durchführen zu können, der zumindest einen Schritt zum Speichern einer jeden Identifizierung, die durch die Trägerströme empfangen wird, in einem Speicher der besagten Vorrichtung (1, 9), der Paarungsspeicher (311) genannt wird, umfasst, um eine Master-Vorrichtung (1, 9) darzustellen.

5. Vorrichtung nach einem der Ansprüche 1 oder 2, darüber hinaus **dadurch gekennzeichnet, dass**:
- sie ein Modul umfasst, das Eingangsmodul (6) genannt wird, das über den besagten elektrischen Anschluss mit zumindest einem Elektrogerät an zumindest ein Elektrogerät (Ap1) angeschlossen ist, und sich dazu eignet, um eine Statusänderung des Elektrogerätes (Ap1) zu erkennen, mit dem es verbunden ist,
- sie ein Modul umfasst, das Ausgangsmodul (7) genannt wird, das über den besagten elektrischen Anschluss mit zumindest einem Elektrogerät an zumindest ein Elektrogerät (Ap2) angeschlossen ist, und sich dazu eignet, um das besagte Elektrogerät (Ap2) zu steuern,
- sich die Einheit (3) zur Datenverarbeitung dazu eignet, um nach Empfang zumindest eines Steuersignals durch den besagten Paarungssteuerungsdetektor (4) zumindest einen Paarungsvorgang durchführen zu können, folgendes umfassend:
-- zumindest einen Schritt zum Aktivieren oder Deaktivieren eines Modus der Vorrichtung (9), der Master-Paarungsmodus genannt wird, und
-- zumindest einen Schritt zum Senden eines Signals über die Trägerströme ins Stromversorgungsnetz (8), das Anfragesignal genannt wird,
- sich die besagte Einheit (3) zur Datenverarbeitung dazu eignet, um nach Empfang über Trägerströme eines Anfragesignals einer anderen Trägerstrom-Steuervorrichtung (1, 9), die mit demselben Stromversorgungsnetz (8) verbunden ist, zumindest einen Vorgang durchführen zu können, folgendes umfassend:
-- zumindest einen Schritt zum Aktivieren eines Modus der Vorrichtung (9), der Slave-Paarungsmodus genannt wird,
- sich die besagte Einheit (3) zur Datenverarbeitung dazu eignet, um im Slave-Paarungsmodus und nach Empfang zumindest eines repräsentativen Steuersignals einer Paarungssteuerung durch den besagten Paarungssteuerungsdetektor (4) zumindest einen Paarungsvorgang der besagten Vorrichtung (9) mit zumindest einer anderen Trägerstrom-Steuervorrichtung (1, 9) vornehmen zu können, die an dasselbe Stromversorgungsnetz (8) angeschlossen ist, wobei der besagte Paarungsvorgang zumindest einen Schritt zum Senden zumindest einer Identifizierung der Vorrichtung (9) über die Trägerströme in das Stromversorgungsnetz (8) umfasst,
- sich die besagte Einheit (3) zur Datenverarbeitung dazu eignet, um im Master-Paarungsmodus und nach Empfang zumindest einer Identifizierung zumindest einer anderen Trägerstrom-Steuervorrichtung (2, 9) zumindest einen Paarungsvorgang Trägerströme vornehmen zu können, der zumindest einen Schritt zum Speichern einer jeden Identifizierung, die durch die Trägerströme empfangen wird, durch die besagte Vorrichtung (9) in einem Speicher umfasst, der Paarungsspeicher (311) genannt wird.

6. Trägerstrom-Steuerverfahren von Elektrogeräten (Ap1, Ap2), wobei man zumindest zwei Trägerstrom-Steuervorrichtungen (1, 2, 9) dank ihrer elektrischen Anschlussmittel für ein Stromversorgungsnetz (8) elektrisch an ein Stromversorgungsnetz (8) anschließt, man jede der Vorrichtungen (1, 2, 9) dank ihrer elektrischen Anschlussmittel für ein Elektrogerät elektrisch mit zumindest einem Elektrogerät (Ap1, Ap2) verbindet, das mit dem besagten Stromversorgungsnetz (8) verbunden ist, wobei die besagten Trägerstrom-Steuervorrichtungen (1, 2, 9) zumindest eine Einheit (3) zur Datenverarbeitung umfassen, die sich dazu eignet, um eine Kommunikation über Trägerströme im besagten Stromversorgungsnetz zwischen den besagten Trägerstrom-Steuervorrichtungen (1, 2, 9) zu ermöglichen, wobei die besagte Kommunikation eine Übertragung von zumindest einer Identifizierung der zumindest einen der Trägerstrom-Steuervorrichtungen (1, 2, 9) im Stromversorgungsnetz umfasst,
**dadurch gekennzeichnet, dass**:
- man jede Trägerstrom-Steuervorrichtung (1, 2, 9) auswählt, die mit zumindest einem Detektor ausgestattet ist, der Paarungssteuerungsdetektor (4) genannt wird, der mit der besagten Einheit (3) zur Datenverarbeitung der Trägerstrom-Steuervorrichtung verbunden ist, und sich dazu eignet, zumindest ein gerichtetes magnetisches Paarungssteuersignal empfangen und erkennen zu können, das drahtlos und kontaktlos durch Abtasten eines passiven und gerichteten Fernsteuersignalsenders des Paarungssteuerungsdetektors (4) in der Nähe von letzterem ausgesandt wird,
- man durch Abtasten eines passiven und gerichteten Fernsteuersignalsenders in der Nähe des Paarungssteuerungsdetektors (4) zumindest einer der besagten Trägerstrom-Steuervorrichtungen, die Slave-Vorrichtung (2, 9) genannt wird, ein drahtloses, gerichtetes magnetisches Steuersignal erzeugt, das repräsentativ für eine Paarungssteuerung ist, und die besagte Einheit zur Datenverarbeitung der Slave-Vorrichtung nach Erfassen dieser Paarungssteuerung durch den besagten Paarungssteuerungsdetektor (4) der Slave-Vorrichtung (2, 9) einen Paarungsvorgang durchführt, der zumindest einen Schritt zum Senden zumindest einer Identifizierung der Slave-Vorrichtung über die Trägerströme in das Stromversorgungsnetz (8) umfasst,
- man durch Abtasten eines passiven und gerichteten Fernsteuersignalsenders in der Nähe des Paarungssteuerungsdetektors (4) zumindest einer anderen der besagten Trägerstrom-Steuervorrichtungen, die Master-Vorrichtung (1, 9) genannt wird, ein drahtloses, gerichtetes magnetisches Steuersignal erzeugt, das repräsentativ für eine Paarungssteuerung ist, und die besagte Einheit (3) zur Datenverarbeitung der Master-Vorrichtung nach Erfassen dieser Paarungssteuerung durch den besagten Paarungssteuerungsdetektor (4) der Master-Vorrichtung einen Paarungsvorgang durchführt, der zumindest einen Schritt zum Speichern einer jeden Identifizierung einer Trägerstrom-Steuervorrichtung umfasst, die von dieser Master-Vorrichtung über Trägerströme empfangen werden.

7. Verfahren nach Anspruch 6, **dadurch gekennzeichnet, dass**:
a. man nacheinander ein drahtloses gerichtetes Steuersignal für einen Paarungssteuerungsdetektor (4) einer Master-Vorrichtung (1, 9) erzeugt, das repräsentativ für eine Paarungssteuerung ist,
b. die Einheit (3) zur Datenverarbeitung der Master-Vorrichtung nach Erfassung dieser Paarungssteuerung durch den besagten Paarungssteuerungsdetektor der Master-Vorrichtung (1, 9) in einen Modus übergeht, der Master-Paarungsmodus genannt wird, und zumindest einen Schritt zum Senden eines Signals, das Anfragesignal genannt wird, über die Trägerströme in das Stromversorgungsnetz (8) durchführt,
c. die Einheit zur Datenverarbeitung zumindest einer Slave-Vorrichtung (2, 9) nach Empfang eines Anfragesignals in einen Modus übergeht, der Slave-Paarungsmodus genannt wird,
d. man ein drahtloses, gerichtetes Steuersignal, das repräsentativ für eine Paarungssteuerung ist, in Richtung des Paarungssteuerungsdetektors (4) einer Slave-Vorrichtung (2, 9) erzeugt,
e. die Einheit zur Datenverarbeitung der Slave-Vorrichtung, die sich im Slave-Paarungsmodus befindet, nach Erfassung dieser Paarungssteuerung durch den Paarungssteuerungsdetektor (4) der besagten Slave-Vorrichtung zumindest einen Schritt zum Senden zumindest einer Identifizierung der Slave-Vorrichtung (2, 9) über die Trägerströme ins Stromversorgungsnetz (8) durchführt.
f. die Einheit (3) zur Datenverarbeitung der besagten Master-Vorrichtung (1, 9) im Master-Paarungsmodus jede Identifizierung einer Slave-Vorrichtung (2, 9) empfängt und einen Schritt zum Speichern einer jeden Identifizierung einer Slave-Vorrichtung, die von dieser Master-Vorrichtung über Trägerströme empfangen wird, in einem Speicher durchführt, der Paarungsspeicher (311) genannt wird,
g. man ein drahtloses, gerichtetes Steuersignal, das repräsentativ für eine Paarungssteuerung ist, für in Richtung des Paarungssteuerungsdetektors (4) der besagten Master-Vorrichtung (1, 9) erzeugt,
h. die besagte Einheit (3) zur Datenverarbeitung der Master-Vorrichtung im Master-Paarungsmodus nach dem Erfassen dieser Paarungssteuerung durch den Paarungssteuerungsdetektor (4) der Master-Vorrichtung zumindest einen Schritt zum Senden eines Signals, das Anfrageendsignal genannt wird, über Trägerströme ins Stromversorgungsnetz (8) ausführt, jede Identifizierung einer Slave-Vorrichtung vom besagten Paarungsspeicher (311) in zumindest einen nicht-flüchtigen Speicher (312) überträgt und den Master-Paarungsmodus verlässt,
i. die Einheit (3) zur Datenverarbeitung der besagten Slave-Vorrichtung im Slave-Paarungsmodus nach dem Empfang eines Anfrageendsignals durch eine Slave-Vorrichtung (2, 9) den Slave-Paarungsmodus verlässt.

8. Verfahren nach einem der Ansprüche 6 oder 7, **dadurch gekennzeichnet, dass** das drahtlose, gerichtete Steuersignal, das repräsentativ für eine Paarungssteuerung ist, von Hand von einem Nutzer in der Nähe durch Abtasten eines passiven gerichteten Senders, kontaktlos und in Richtung des besagten Paarungssteuerungsdetektors (4) erzeugt wird.

9. Netzwerk von Trägerstrom-Steuervorrichtungen (1, 2, 9) von Elektrogeräten (Ap1, Ap2), zumindest zwei Trägerstrom-Steuervorrichtungen (1, 2, 9) von Eelektrogeräten umfassend, von denen jede durch zumindest einen elektrischen Anschluss an ein Stromversorgungsnetz (8) angeschlossen ist, jede durch zumindest einen elektrischen Anschluss elektrisch mit zumindest einem Elektrogerät (Ap1, Ap2) verbunden ist, das mit dem besagten Stromversorgungsnetz (8) verbunden ist, wobei jede eine Einheit (3) zur Datenverarbeitung umfasst, die sich dazu eignet, um eine Kommunikation über Trägerströme im besagten Stromversorgungsnetz (8) zu ermöglichen, wobei die besagte Kommunikation eine Übertragung von zumindest einer Identifizierung der zumindest einen der Trägerstrom-Steuervorrichtungen (1, 2, 9) im Stromversorgungsnetz (8) umfasst, **dadurch gekennzeichnet, dass** zumindest zwei der Trägerstrom-Steuervorrichtungen (1, 2, 9) von Elektrogeräten Vorrichtungen nach einem der Ansprüche 1 bis 5 sind.

## Claims

1. Device (1, 2, 9) for controlling electrical apparatus (Ap1, Ap2) via carrier currents, comprising an electrical connection to an electrical power supply network (8), an electrical connection to at least one electrical apparatus connected to said electrical power supply network, a data processing unit (3) adapted to allow carrier current communication over said electrical power supply network between said device (1, 2, 9) and at least one other device (1, 2, 9) for carrier current control connected to the same electrical power supply network, said communication comprising a transmission over said electrical power supply network (8) of at least one identifier of at least one of said devices for carrier current control, **characterised in that** it comprises:
- at least one magnetic field detector (4), named matching command detector (4), which is sensitive to at least one directional magnetic matching command signal that is transmitted wirelessly and contactlessly by scanning a passive and directional transmitter of remote control signals of said matching command detector (4) in the vicinity of the latter, said matching command detector (4) being connected to said data processing unit (3);
- a peripheral electric insulation protection; and **in that**
- said data processing unit (3) is adapted to be able to execute, upon detection by said matching command detector (4) of a command signal representing a matching command, at least one process for matching said device for carrier current control with at least one other device (1, 2, 9) for carrier current control connected to the same electrical power supply network (8), said matching process comprising:
▪ at least one step of carrier current transmission over said electrical power supply network (8) of at least one identifier of at least one of said devices (1, 2, 9) for carrier current control, named slave device (2, 9);
▪ at least one step of recording, by at least one of said devices (1, 2, 9) for carrier current control, named master device (1, 9), each identifier received via carrier currents by said master device (1, 9).

2. Device according to claim 1, **characterised in that** said matching command detector (4) is a Hall effect sensor.

3. Device according to claim 1 or 2, further **characterised in that**:
- it comprises a module, named output module (7), connected to at least one electrical apparatus (Ap2) via said electrical connection with at least one electrical apparatus and adapted to control said electrical apparatus (Ap2);
- said data processing unit (3) is adapted to be able to execute at least one matching process comprising at least one step of carrier current transmission over said electrical power supply network (8) of at least one identifier of said device (2, 9),
so that it forms a slave device (2, 9).

4. Device according to claim 1 or 2, further **characterised in that**:
- it comprises a module, named input module (6), connected to at least one electrical apparatus (Ap1) via said electrical connection with at least one electrical apparatus and adapted to detect a change in the state of said electrical apparatus (Ap1) to which it is connected;
- said data processing unit (3) is adapted to be able to execute at least one matching process comprising at least one step of recording each identifier received via carrier currents in a memory, named matching memory (311), of said device (1, 9),
so that it forms a master device (1, 9).

5. Device according to claim 1 or 2, further **characterised in that**:
- it comprises a module, named input module (6), connected to at least one electrical apparatus (Ap1) via said electrical connection with at least one electrical apparatus and adapted to detect a change in the state of said electrical apparatus (Ap1) to which it is connected;
- it comprises a module, named output module (7), connected to at least one electrical apparatus (Ap2) via said electrical connection with at least one electrical apparatus and adapted to control said electrical apparatus (Ap2);
- said data processing unit (3) is adapted to be able to execute, upon reception of at least one command signal by said matching command detector (4), at least one matching process comprising:
▪ at least one step of activating or deactivating a mode, named master matching mode, of said device (9); and
▪ at least one step of carrier current transmission of a signal, named request signal, over said electrical power supply network (8);
- said data processing unit (3) is adapted to be able to execute, upon reception via carrier currents of a request signal from another device (1, 9) for carrier current control connected to the same electrical power supply network (8), at least one process comprising:
▪ at least one step of activating a mode, named slave matching mode, of said device (9);
- said data processing unit (3) is adapted to be able to execute, in slave matching mode and upon reception by said matching command detector (4) of at least one command signal representing a matching command, at least one process for matching said device (9) with at least one other device (1, 9) for carrier current control connected to the same electrical power supply network (8), said matching process comprising at least one step of carrier current transmission over said electrical power supply network (8) of at least one identifier of said device (9);
- said data processing unit (3) is adapted to be able to execute, in master matching mode and upon reception of at least one identifier of at least one other device (2, 9) for carrier current control, at least one matching process comprising at least one step of said device (9) recording each identifier received via carrier currents in a memory, named matching memory (311).

6. Method for controlling electrical apparatus (Ap1, Ap2) via carrier currents, wherein at least two devices (1, 2, 9) for carrier current control are electrically connected to an electrical power supply network (8) through their means for electrically connecting to an electrical power supply network (8), each of said devices (1, 2, 9) is electrically connected to at least one electrical apparatus (Ap1, Ap2) connected to said electrical power supply network (8) through their means for electrically connecting to an electrical apparatus, said devices (1, 2, 9) for carrier current control comprising at least one data processing unit (3) adapted to allow carrier current communication over said electrical power supply network between said devices (1, 2, 9) for carrier current control, said communication comprising a transmission over said electrical power supply network of at least one identifier of at least one of said devices (1, 2, 9) for carrier current control,
**characterised in that** it comprises:
- selecting each device (1, 2, 9) for carrier current control equipped with at least one detector, named matching command detector (4), connected to said processing unit (3) of said device for carrier current control and adapted to be able to receive and detect at least one directional magnetic matching command signal that is transmitted wirelessly and contactlessly by scanning a passive and directional transmitter of remote control signals of said matching command detector (4) in the vicinity of the latter;
- generating a wireless directional magnetic command signal representing a matching command by scanning a passive and directional transmitter of remote control signals in the vicinity of said matching command detector (4) of at least one of said devices for carrier current control, named slave device (2, 9), and, upon detection of this matching command by said matching command detector (4) of said slave device (2, 9), said data processing unit of said slave device executing a matching process comprising at least one step of carrier current transmission over said electrical power supply network (8) of at least one identifier of said slave device;
- generating a wireless directional magnetic command signal representing a matching command by scanning a passive and directional transmitter of remote control signals in the vicinity of said matching command detector (4) of at least one other of said devices for carrier current control, named master device (1, 9), and, upon detection of said matching command by said matching command detector (4) of said master device, said data processing unit (3) of said master device executing a matching process comprising at least one step of recording each device for carrier current control identifier that is received via carrier currents by said master device.

7. Method according to claim 6, **characterised in that** it successively involves:
a. generating a wireless directional command signal representing a matching command intended for the matching command detector (4) of a master device (1, 9);
b. said processing unit (3) of said master device entering a mode, named master matching mode, upon detection of said matching command by said matching command detector of said master device (1, 9), and executing at least one step of carrier current transmission of a signal, named request signal, over said electrical power supply network (8);
c. the processing unit of at least one slave device (2, 9) entering a mode, named slave matching mode, upon reception of a request signal;
d. generating a wireless directional command signal representing a matching command intended for the matching command detector (4) of a slave device (2, 9);
e. said processing unit of said slave device, being in slave matching mode, executing, upon detection of said matching command by said matching command detector (4) of said slave device, at least one step of carrier current transmission over said electrical power supply network (8) of at least one identifier of said slave device (2, 9);
f. said processing unit (3) of said master device (1, 9), being in master matching mode, receiving each slave device (2, 9) identifier and executing a step of recording each slave device identifier received via carrier currents by said master device in a memory, named matching memory (311);
g. generating a wireless directional command signal representing a matching command intended for the matching command detector (4) of said master device (1, 9);
h. said processing unit (3) of said master device, being in master matching mode, executing, upon detection of said matching command by said matching command detector (4) of said master device, at least one step of carrier current transmission of a signal, named end-of-request signal, over said electrical power supply network (8), transferring each slave device identifier from said matching memory (311) to at least one non-volatile memory (312) and exiting said master matching mode;
i. said processing unit (3) of said slave device, being in slave matching mode, exiting said slave matching mode upon reception of an end-of-request signal by a slave device (2, 9).

8. Method according to claim 6 or 7, **characterised in that** the wireless directional command signal representing a matching command is manually generated by a user by scanning a directional passive transmitter, in the vicinity, contactlessly and in the direction of said matching command detector (4).

9. Array of devices (1, 2, 9) for controlling electrical apparatus (Ap1, Ap2) via carrier currents, comprising at least two devices (1, 2, 9) for controlling electrical apparatus via carrier currents, each electrically connected to an electrical power supply network (8) by at least one electrical connection, each electrically connected to at least one electrical apparatus (Ap1, Ap2) connected to said electrical power supply network (8) by at least one electrical connection, each comprising a data processing unit (3) adapted to allow carrier current communication over said electrical power supply network (8), said communication comprising a transmission over said electrical power supply network (8) of at least one identifier of at least one of said devices (1, 2, 9) for carrier current control, **characterised in that** at least two of said devices (1, 2, 9) for controlling electrical apparatus via carrier currents are devices according to any one of claims 1 to 5.
